(19) Europäisches Patentamt
European Patent Office
Office européen des brevets

(11) Veröffentlichungsnummer: **0 027 950**
**B1**

(12) # EUROPÄISCHE PATENTSCHRIFT

(45) Veröffentlichungstag der Patentschrift: **15.02.84**

(51) Int. Cl.³: **C 09 B 62/012,** C 09 B 62/002, D 06 P 3/10

(21) Anmeldenummer: **80106239.9**

(22) Anmeldetag: **14.10.80**

(54) **Neue faserreaktive Chromkomplexfarbstoffe, deren Herstellung und Verwendung.**

(30) Priorität: **19.10.79 CH 9416/79**

(43) Veröffentlichungstag der Anmeldung: **06.05.81 Patentblatt 81/18**

(45) Bekanntmachung des Hinweises auf die Patenterteilung: **15.02.84 Patentblatt 84/7**

(84) Benannte Vertragsstaaten: **BE CH DE FR GB IT LI**

(56) Entgegenhaltungen:
**DE - A - 2 210 260**
**FR - A - 1 247 516**
**FR - A - 1 529 173**
**FR - A - 2 355 884**
**FR - A - 2 368 521**
**GB - A - 2 007 697**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Patentabteilung Postfach, CH-4002 Basel (CH)**

(72) Erfinder: **Schütz, Hans Ulrich, Hans Huberstrasse 23, CH-4053 Basel (CH)**
Erfinder: **Bühler, Arthur, Dr., Im Lichs 6, CH-4310 Rheinfelden (CH)**

(74) Vertreter: **Berg, Wilhelm, Dr. et al, Dr. Berg, Dipl.-Ing. Stapf, Dipl.-Ing. Schwabe, Dr. Dr. Sandmair Mauerkircherstrasse 45, D-8000 München 80 (DE)**

EP 0 027 950 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Neue faserreaktive Chromkomplexfarbstoffe, deren Herstellung und Verwendung

Gegenstand der Erfindung sind Chromkomplexfarbstoffe, die in Form der freien Säure der Formel

(1) 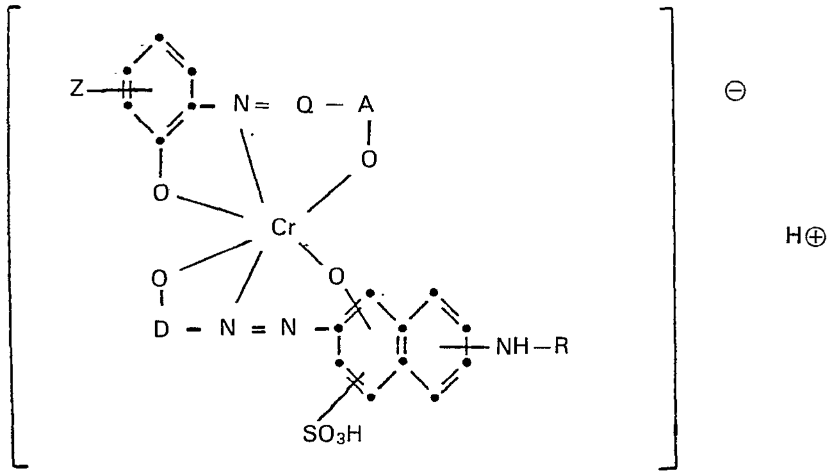

entsprechen, worin Z Wasserstoff, Nitro, Chlor oder eine Arylazogruppe, Q ein Stickstoffatom oder die CH-Gruppe, A für den Fall, dass Q ein Stickstoffatom ist, den Rest einer in o-Stellung zum Sauerstoffatom kuppelnden Kupplungskomponente oder, für den Fall, dass Q die CH-Gruppe ist, den Rest eines o-Hydroxyaldehyds, D einen gegebenenfalls mit Nitro oder Chlor substituierten Sulfophenylrest oder einen gegebenenfalls mit Nitro substituierten Sulfonaphthylrest, der in o-Stellung zum Sauerstoffatom an die Azogruppe gebunden ist, und R eine Fluorchlorpyrimidylgruppe, Chloracetyl, Bromacetyl, α-Chlor- oder α-Bromacryloyl oder α,β-Dichlor- oder α,β-Dibrompropionyl bedeutet.

Diese Farbstoffe werden zweckmässig in Form ihrer Salze isoliert, insbesondere als Alkalisalze, wie z.B. Lithium-, Kalium- und vor allem Natriumsalze oder auch als Ammoniumsalze oder Salze von organischen Aminen mit positiv geladenem Stickstoffatom. Der Einfachheit halber werden sie jedoch im folgenden stets in Form der freien Säure dargestellt.

Der Ausdruck «Aryl» bezeichnet hierin eine Naphthyl- oder insbesondere eine Phenylgruppe, die mit den in Farbstoffen üblichen nicht-ionogenen Substituenten wie Nitro, Chlor, Brom, niedrigmolekularem Alkyl und niedrigmolekularem Alkoxy substituiert sein kann. Mit «niedrigmolekular» sind Reste mit 1 bis 5 C-Atomen gemeint.

Die neuen Farbstoffe der Formel (1) werden erhalten, indem man die eine der Verbindungen der Formel

(2) 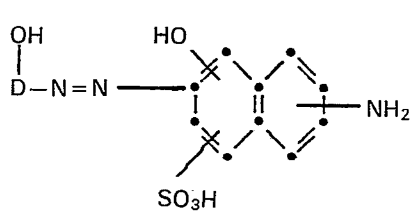

und

(3) 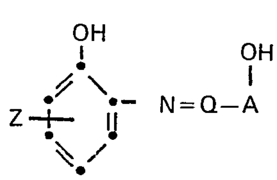

mit einem chromabgebenden Mittel zum 1:1-Chromkomplex umsetzt und diesen mit der andern der beiden obigen Verbindungen in den 1:2-Chromkomplex überführt, und vor oder nach der Chromierung die Verbindung der Formel (2) mit einem den Rest R abgebenden Acylierungsmittel umsetzt, wobei, wenn Q die CH-Gruppe bedeutet, der 1:1-Chromkomplex der Verbindung der Formel (2) statt mit dem Azomethin der Formel (3) auch mit einem Gemisch des Amins der Formel

(4) 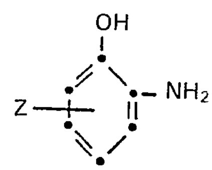

und des Aldehyds der Formel

(5) OCH—A—OH

umgesetzt werden kann.

Vorzugsweise stellt man zuerst den 1:1 Chromkomplex der Verbindung der Formel (2) her, lagert an diesen die Verbindung der Formel (3), bzw. das Gemisch der Verbindungen der Formel (4) und (5) an und acyliert den erhaltenen 1:2-Chromkomplex.

Die Herstellung dieser Chromkomplexe geschieht nach an sich bekannten Methoden. Man stellt z.B. den 1:1-Chromkomplex der Verbindung der Formel (2) her, indem man die metallfreie Verbindung in saurem Medium mit einem Salz des dreiwertigen Chroms wie Chromchlorid, Chromfluorid oder Chromsulfat, umsetzt, gegebenenfalls in Anwesenheit von löslichkeitsfördernden oder die Chromierung beschleunigenden Mitteln, wie z.B. Alkoholen oder Hydroxycarbonsäuren. Anschliessend lässt man den 1:1-Komplex in neutralem bis schwach alkalischem Medium mit einer Verbindung der Formel (3) reagieren, bzw. mit dem Gemisch der Verbindungen der Formeln (4) und (5).

Als Diazokomponenten der Verbindungen der Formel (2) kommen in Betracht:

2-Amino-1-hydroxybenzol-4- oder -5-sulfosäure,
4-Nitro-2-amino-1-hydroxybenzol-5- oder -6-sulfosäure,
5- oder 6-Nitro-2-amino-1-hydroxybenzol-4-sulfosäure,
6-Chlor-2-amino-1-hydroxybenzol-4-sulfosäure,
1-Amino-2-hydroxynaphthalin-4-sulfosäure sowie
1-Amino-2-hydroxynaphthalin-6-nitro-4-sulfosäure.

Als Kupplungskomponente werden Aminonaphtholsulfonsäuren verwendet wie 1-Amino-5-naphthol-7-sulfonsäure, 1-Amino-8-naphthol-4-sulfonsäure oder 2-Amino-6-naphthol-8-sulfonsäure und vorzugsweise 2-Amino-8-naphthol-6-sulfonsäure und 2-Amino-5-naphthol-7-sulfonsäure.

Geeignete Diazokomponenten von Verbindungen der Formel (3), bzw. Amine der Formel (4) sind z.B.

2-Amino-1-hydroxybenzol,
4- oder 5-Nitro-2-amino-1-hydroxybenzol,
4-Chlor-2-amino-1-hydroxybenzol,
4-(o-Methoxyphenylazo)-2-amino-1-hydroxybenzol,
4-(p-Chlorphenylazo)-2-amino-1-hydroxybenzol oder
4-(p-Nitrophenylazo)-2-amino-1-hydroxybenzol.

Der Rest A leitet sich bevorzugt von folgenden Gruppen von Kupplungskomponenten ab:
— 5-Pyrazolone, die in 1-Stellung Wasserstoff oder einen gegebenenfalls mit Chlor, Nitro oder niedrigmolekularen Alkyl- oder Alkoxygruppen substituierten Phenyl- oder Naphthylrest besitzen.
— Acetessigsäurearylide, insbesondere -anilide, die im Anilidkern gegebenenfalls mit Chlor, Brom, niedrigmolekularem Alkyl oder Alkoxy substituiert sein können.
— Naphthole, die gegebenenfalls mit Chlor oder nicht reaktiven Acylaminogruppen substituiert sind.
— Phenole, die mit nicht reaktiven Acylaminogruppen und/oder mit vorzugsweise 1 bis 5 C-Atome enthaltenden Alkylgruppen oder mit Dialkylaminogruppen, deren Alkylreste 1 bis 5 C-Atome aufweisen, substituiert sind und in o-Stellung zur Hydroxylgruppe kuppeln.

Als nicht reaktive Acylaminogruppen kommen vor allem niedrigmolekulare Alkanoyl- und Alkoxycarbonylaminogruppen sowie die Benzoylaminogruppe in Betracht.

Beispiele solcher Kupplungskomponenten sind:

2-Naphthol,
1,3- oder 1,5-Dihydroxynaphthalin,
1-Naphthol,
1-Acetylamino-7-naphthol,
1-Propionylamino-7-naphthol,
1-Carbomethoxyamino-7-naphthol,
1-Carboäthoxyamino-7-naphthol,
1-Carbopropoxyamino-7-naphthol,
5,8-Dichlor-1-naphthol,
5-Chlor-1-naphthol,
1-Phenyl-3-methyl-pyrazol-5-on,
1-(2'-, 3'- oder 4'-Methylphenyl)-3-methyl-pyrazol-5-on,
1-(2'- oder 4'-Methoxyphenyl)-3-methyl-pyrazol-5-on,
1-(2'-, 3'- oder 4'-Chlorphenyl)-3-methyl-pyrazol-5-on,
1-(2'-, 3'- oder 4'-Nitrophenyl)-3-methyl-pyrazol-5-on,
1-(2'-, 5'- oder 3'-, 4'-Dichlorphenyl)-3-methyl-pyrazol-5-on,
Acetoacetanilid,
Acetoacet-o-anisidid,
Acetoacet-o-toluidid,
Acetoacet-o-chloranilid,
Acetoacet-m-xylidid,
4-Methylphenol,
3-Dialkylaminophenol, besonders 3-Dimethylamino- und 3-Diäthylaminophenol,
4-Butylphenol,
4-Amylphenol, insbesondere 4-t-Amylphenol,
2-Isopropyl-4-methylphenol,
2- oder 3-Acetylamino-4-methylphenol,
2-Methoxycarbonylamino-4-methylphenol,
2-Äthoxycarbonylamino-4-methylphenol,
2,4-Dimethylphenol und 3,4-Dimethylphenol,
2,4-Dioxychinolin,
Resorcin.

Geeignete Aldehyde der Formel (5) sind beispielsweise:

2-Hydroxynaphthaldehyd, 1-Hydroxy-2-naphthaldehyd,
5-Methyl-2-hydroxybenzaldehyd,
3,5-Dimethyl-2-hydroxybenzaldehyd,
5-Butyl-2-hydroxybenzaldehyd,
5-Chlor- oder 5-Brom-2-hydroxybenzaldehyd,

sowie die entsprechenden, in 3- oder insbesondere 5-Stellung mit einer Arylazogruppe substituierten Aldehyde. Die Einführung einer Arylazogruppe in die erwähnten o-Hydroxyaldehyde geschieht in üblicher Weise, indem man z.B. Anilin, 4-Nitroanilin, Toluidin, 4-Chloranilin oder $\alpha$-Naphthylamin diazotiert und auf den Aldehyd kuppelt.

Die bevorzugten Aldehyde der Formel (5) leiten sich von einem gegebenenfalls mit Halogen, niedrigmolekularem Alkyl oder Arylazo substituierten o-Hydroxybenzaldehyd ab.

Geeignete, den Rest R abgebende Acylierungsmittel sind Chloracetylchlorid, Bromacetylchlorid, $\alpha,\beta$-Dichlor- oder Dibrompropionylchlorid, $\alpha$-Chlor- oder $\alpha$-Bromacrylsäurechlorid und Fluorchlorpyrimidine wie z.B. 5-Chlor-2,4,6-trifluoropyrimidin.

Bevorzugte Acylierungsmittel sind $\alpha,\beta$-Dibrompropionylchlorid und $\alpha$-Bromacrylsäurechlorid.

Von besonderem Interesse sind Chromkomplexe, die in Form der freien Säure der Formel

(6)

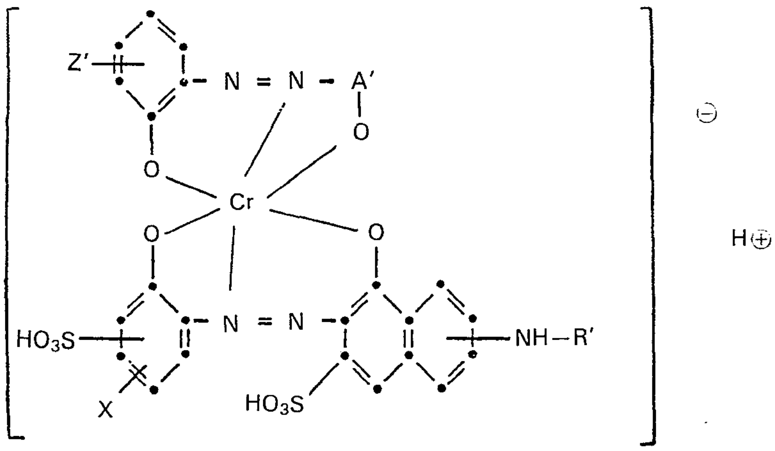

entsprechen, worin Z' Chlor oder Nitro, X Wasserstoff, Chlor oder Nitro, R' den $\alpha,\beta$-Dibrompropionylrest oder den $\alpha$-Bromacryloylrest und A' den Rest eines 1-Aryl-3-methyl-pyrazol-5-ons, einen $\beta$-Naphtholrest oder den Rest eines in o-Stellung zur Hydroxygruppe kuppelnden, mit niedrigmolekularem Alkyl oder Dialkylamino substituierten Phenols ist.

Unter diesen sind speziell diejenigen hervorzuheben, worin A' der Rest eines 1-Phenyl-3-methyl-pyrazol-5-ons ist und X und Z' je Nitro bedeuten, da diese besonders wertvolle Braunfärbungen ergeben.

Als Rest eines 1-Phenyl-3-methyl-pyrazol-5-ons sei z.B. der 1-(4'-Chlorphen-1'-yl)-3-methyl-pyrazol-5-on-, 1-(2'-Chlorphen-1'-yl)-3-methyl-pyrazol-5-on- und der im Phenylkern unsubstituierte 1-Phenyl-3-methyl-pyrazol-5-on-Rest besonders erwähnt.

Von Interesse sind insbesondere die Chromkomplexe, die in Form der freien Säure der Formel

(7)

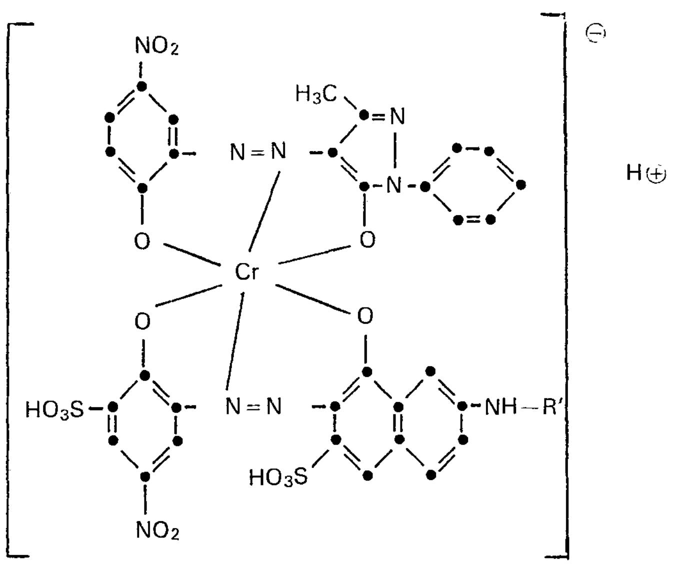

entsprechen, worin R' die unter Formel (6) angegebene Bedeutung hat.

Ein wertvoller Farbstoff ist vor allem der Farbstoff der Formel

(8)

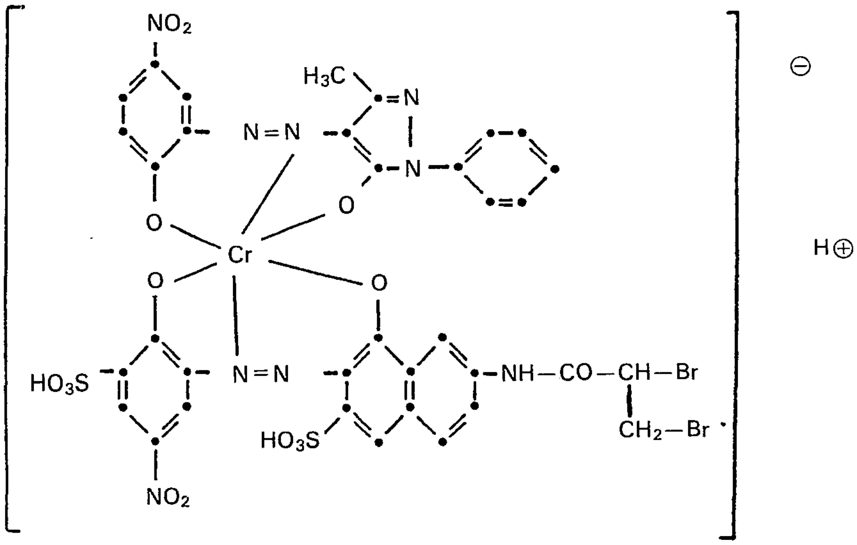

Eine weitere Gruppe interessanter Farbstoffe sind diejenigen der Formel

(9)

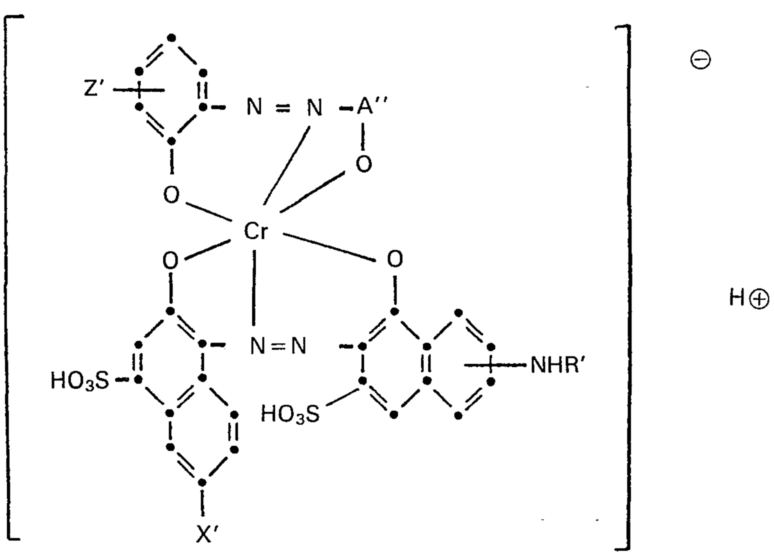

worin Z' Chlor oder Nitro, X' Wasserstoff oder Nitro, R' den α,β-Dibrompropionyl- oder den α-Bromacryloylrest und A'' einen β-Naphtholrest, den Rest eines gegebenenfalls mit Chlor mono- oder disubstituierten 1-Naphthols oder den Rest eines in o-Stellung zur Hydroxygruppe kuppelnden, mit niedrigmolekularem Alkyl oder insbesondere Dialkylamino substituierten Phenols bedeutet. Diese geben besonders wertvolle marineblaue Färbungen.

In den bevorzugten Farbstoffen der Formel (9) bedeutet A'' den Rest eines 3-N,N-Dialkylaminophenols, dessen Alkylgruppen 1 bis 5 C-Atome aufweisen.

Von besonderem Interesse sind die Farbstoffe der Formeln

(10)

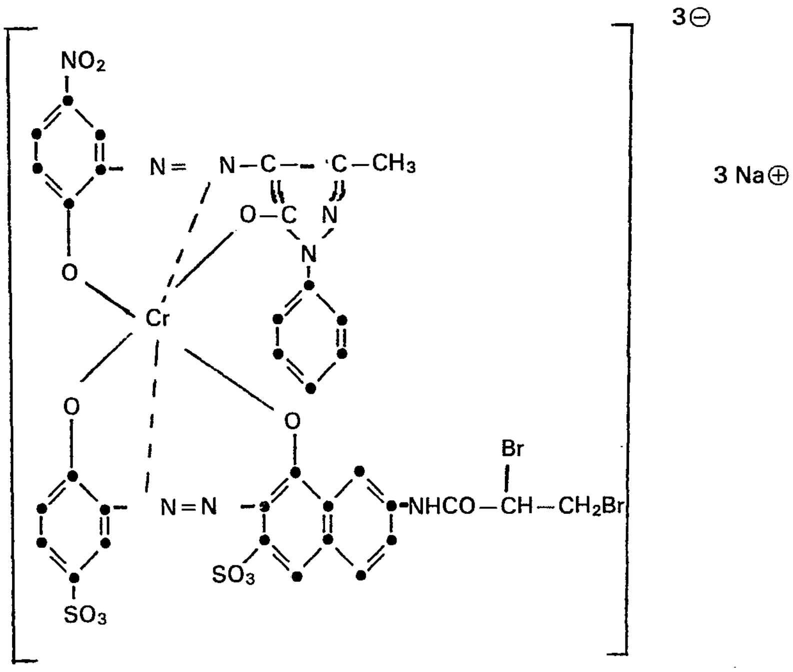

und

(11)

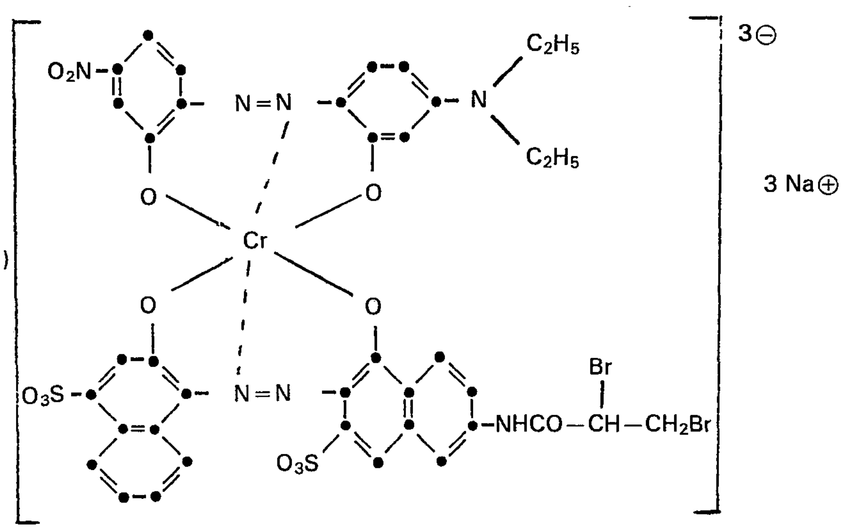

Die neuen Farbstoffe eignen sich zum Färben und Bedrucken von natürlichen oder synthetischen Polyamidmaterialien, wie Seide, synthetisches Polyamid und insbesondere Wolle. Sie geben egale, brillante, farbstarke Färbungen und zeichnen sich durch gute Echtheiten wie Licht- und Reibechtheit, sowie vor allem gute Nassechtheiten wie Wasch-, Walk-, Schweiss-, Heisswasser- und Feuchthitzebeständigkeit aus. Sie ziehen gut aus und bauen zu tiefen, gleichmässigen Färbungen auf.

Die neuen Farbstoffe, die als Reaktivrest einen Fluorchlorpyrimidinrest enthalten, eignen sich besonders zum Färben und Bedrucken von cellulosehaltigen Materialien faseriger Struktur, wie Leinen, Zellstoff, regenerierte Cellulose und insbesondere Baumwolle. Sie eignen sich besonders zum Färben nach dem Foulardfärbeverfahren, wonach die Ware mit wässrigen, gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung fixiert werden.

Es empfiehlt sich, die Färbungen und Drucke einem gründlichen Spülen mit kaltem und heissem Wasser, gegebenenfalls unter Zusatz eines dispergierend wirkenden und die Diffusion der nicht fixierten Anteile fördernden Mittels zu unterwerfen.

Aus der FR-PS 1 529 173 sind ähnliche 1:2-Chromkomplexfarbstoffe bekannt, die sich dadurch von den erfindungsgemässen 1:2-Chromkomplexfarbstoffen unterscheiden, dass der faserreaktive Rest ein $\beta$-Sulfatoäthylsulfonylamino- oder ein Vinylsulfonylaminorest ist. Diese Farbstoffe weisen jedoch nicht alle guten Eigenschaften der erfindungsgemässen Farbstoffe auf.

In den folgenden Beispielen bedeuten die Teile (T) Gewichtsteile und die Prozente Gewichtsprozente; die Temperaturen sind in Celsiusgraden angegeben.

*Beispiel 1*

48,9 T des 1:1 Chromkomplexes des Monoazofarbstoffes, der durch alkalische Kupplung von 2-Aminophenol-4-sulfonsäure auf 2-Amino-8-naphthol-6-sulfonsäure erhalten wird und 33,9 Teile des Monoazofarbstoffes aus 4-Nitro-2-amino-phenol und 1-Phenyl-3-methyl-5-pyrazolon werden in 500 Teilen Wasser 3 Std. bei 80-85° gerührt, wobei mit verd. Natronlauge der pH-Wert bei 7-7,5 gehalten wird. Die Farbstofflösung wird auf 50° gekühlt und mit 15 Teilen Natriumbicarbonat versetzt. Nach 10minütigem Rühren wird mit 200 Teilen Eis auf 10-15° gekühlt und in ca. 1 Std. unter gutem Rühren 13,6 Teile 1,2-Dibrompropionylchlorid zugetropft und weitere 2-3 Std. bei Raumtemperatur nachgerührt. Der gebildete Farbstoff der Formel

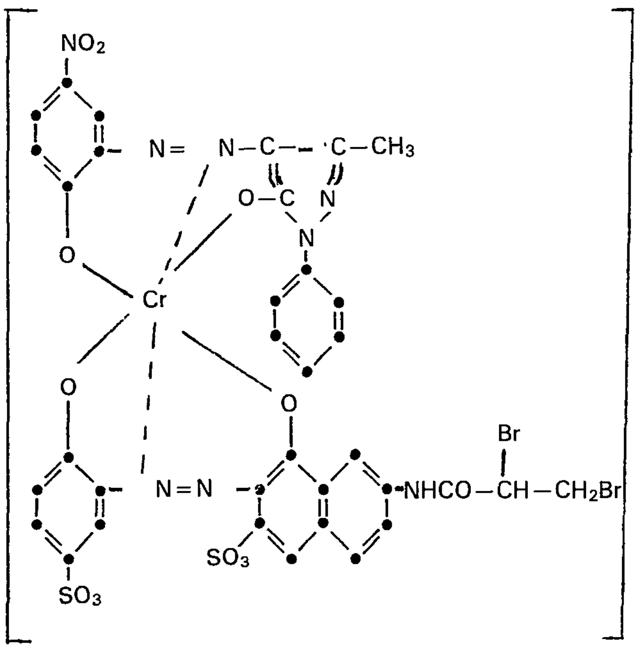

3⊖

3 Na⊕

wird mit Natriumchlorid abgeschieden, filtriert und getrocknet. Der in Form eines wasserlöslichen, dunklen Pulvers erhaltene Farbstoff färbt Wolle in rotbraunen Tönen mit ausgezeichneten Echtheitseigenschaften.

Weitere Farbstoffe mit ähnlichen Eigenschaften, erhält man in analoger Weise durch Umsetzen der 1:1 Chromkomplexe der in der folgenden Tabelle in Kolonne I angegebenen Monoazoverbindungen mit den in Kolonne II aufgeführten metallfreien Azoverbindungen und anschliessende Acylierung des erhaltenen 1:2-Chromkomplexes mit $\alpha,\beta$-Dibrompropionylchlorid. Diese färben Wolle in den in Kol. III angegebenen Nuancen.

| | I | II | III |
|---|---|---|---|
| 1 | 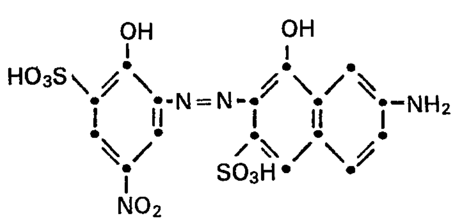 | 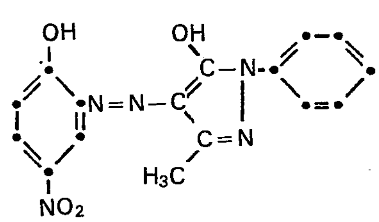 | braun. |
| 2 | do. | 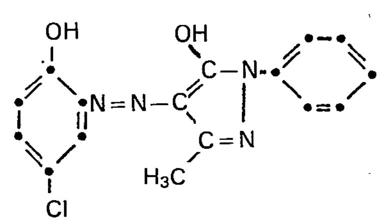 | braun |

| | I | II | III |
|---|---|---|---|
| 3 | do. | 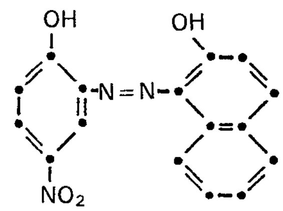 | grau |
| 4 | 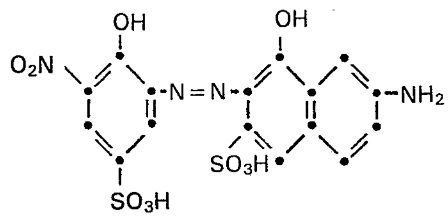 | 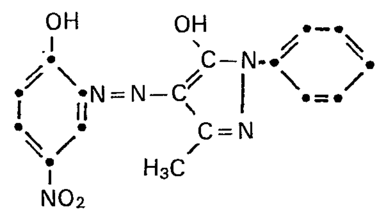 | braun |
| 5 | do. | 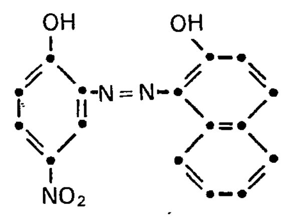 | grau |
| 6 | do. | 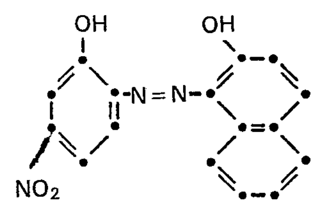 | grau |
| 7 | 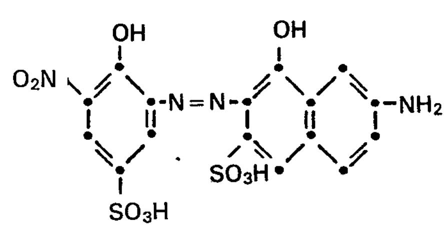 | 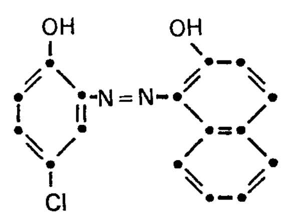 | grau |
| 8 | do. | 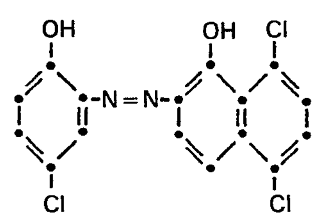 | marineblau |

| | I | II | III |
|---|---|---|---|
| 9 | 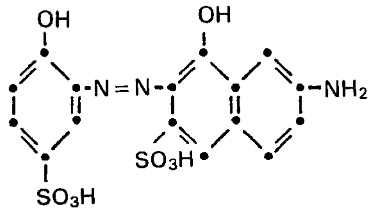 | 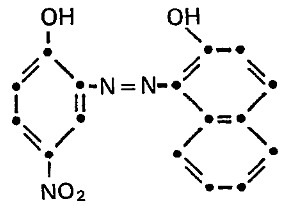 | grau |
| 10 | 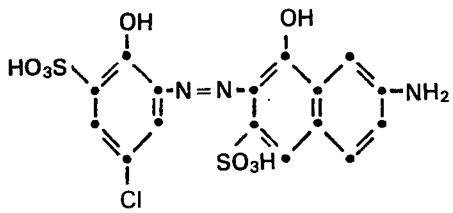 | 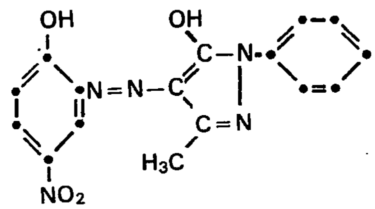 | braun |
| 11 | do. | 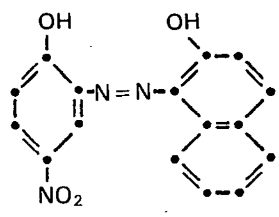 | grau |
| 12 | do. | 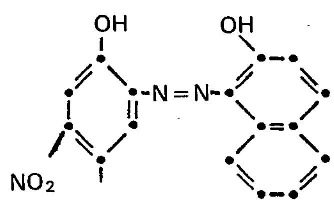 | marineblau |
| 13 | 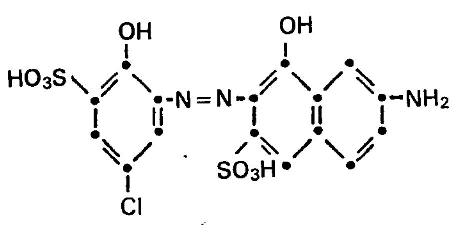 | 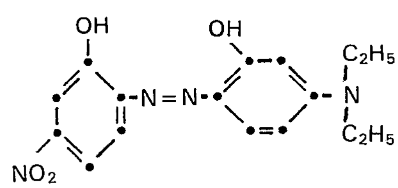 | marineblau |
| 14 | 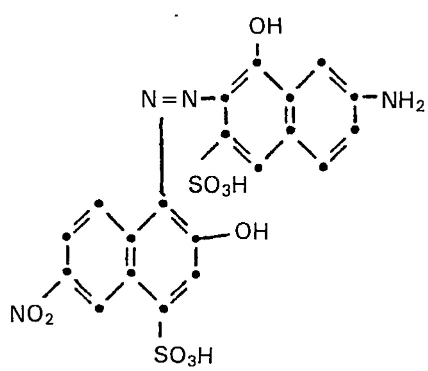 | do. | marineblau |

| | I | II | III |
|---|---|---|---|
| 15 | 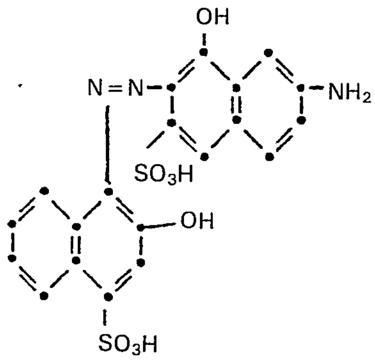 | 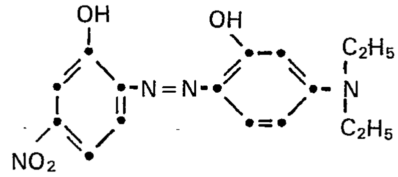 | marineblau |
| 16 | do. | 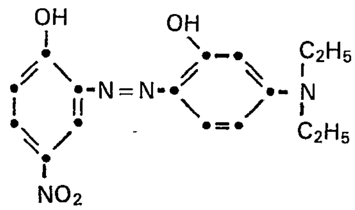 | marineblau |
| 17 | do. | 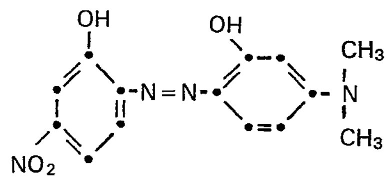 | marineblau |
| 18 | do. | 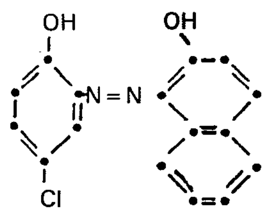 | marineblau |
| 19 | 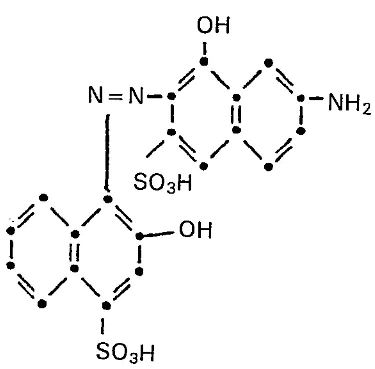 | 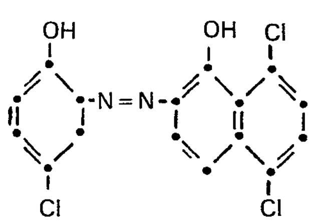 | marineblau |

| | I | II | III |
|---|---|---|---|
| 20 | do. | 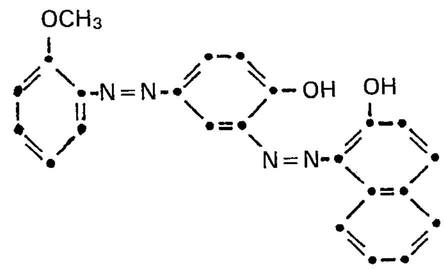 | grau |
| 21 | do. | 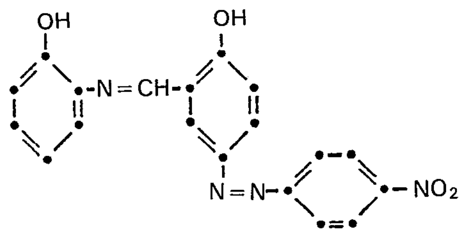 | braun |
| 22 | do. | 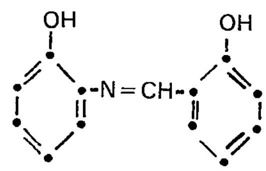 | braunolive |
| 23 | do. | 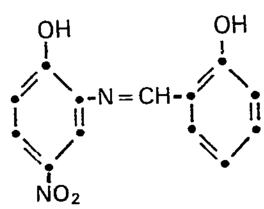 | olive |
| 24 | do. | 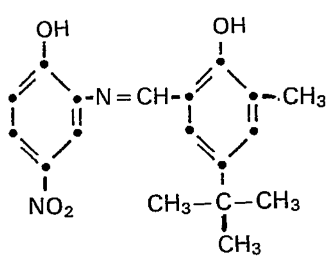 | olive |
| 25 | 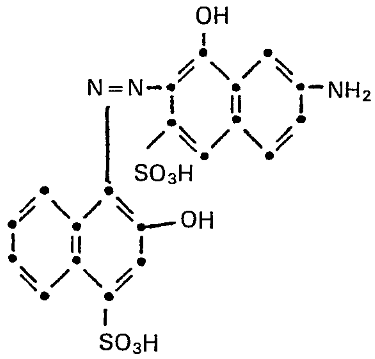 | 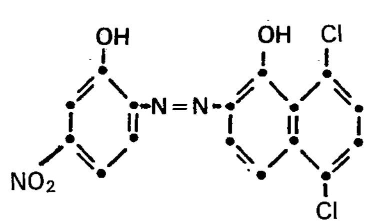 | marineblau |

| | I | II | III |
|---|---|---|---|
| 26 | 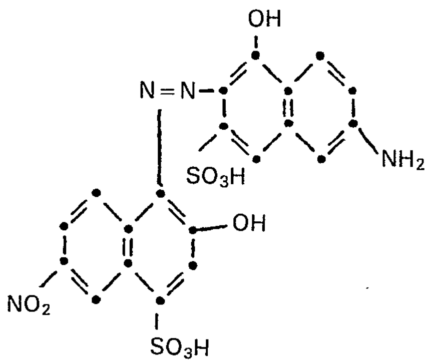 | 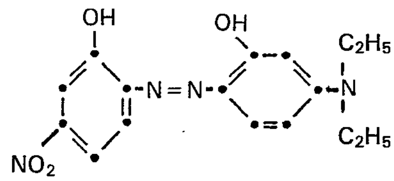 | marineblau |
| 27 | 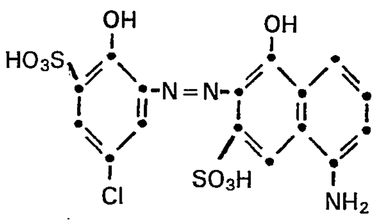 | 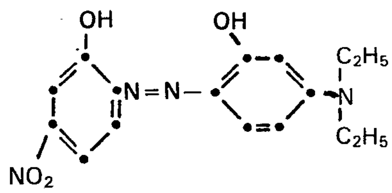 | marineblau |
| 28 | 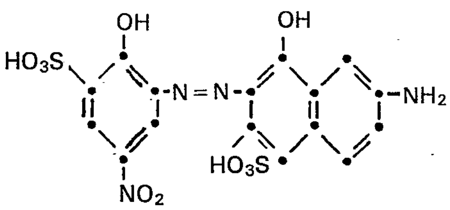 | 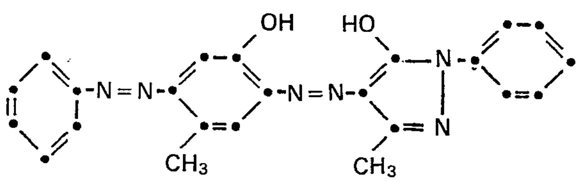 | korinth |
| 29 | do. | 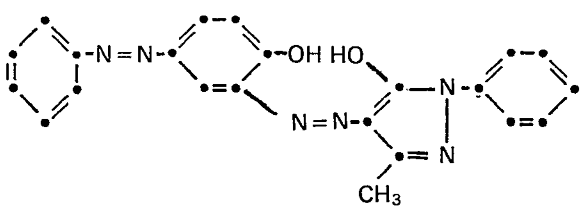 | braun |
| 30 | do. | 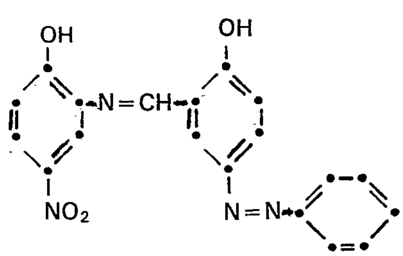 | olive |

| | I | II | III |
|---|---|---|---|
| 31 | 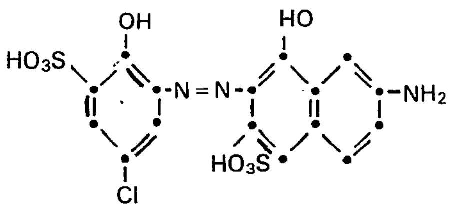 | 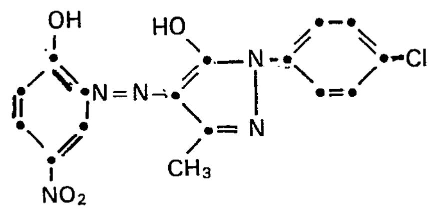 | braun |
| 32 | 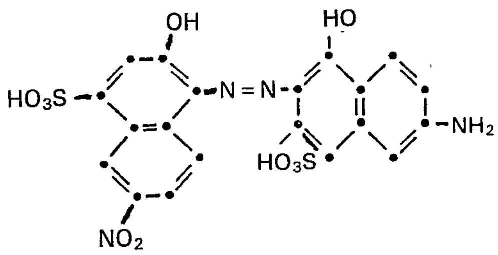 | 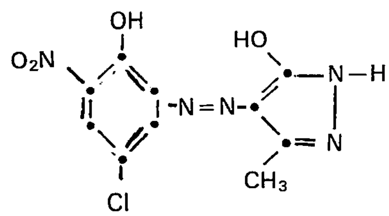 | rotstichig grau |

Einen weiteren faserreaktiven Farbstoff erhält man durch Umsetzen des 1:1-Chromkomplexes der in der folgenden Tabelle in Kolonne I angegebenen Monoazoverbindung mit der in Kolonne II aufgeführten metallfreien Azoverbindung und anschliessender Acylierung des erhaltenen 1:2-Chromkomplexes mit der in Kolonne III angegebenen Reaktivkomponente. Der Farbstoff färbt Baumwolle in der in Kolonne V angegebenen Nuance.

| | I | II | III | V |
|---|---|---|---|---|
| 33 | 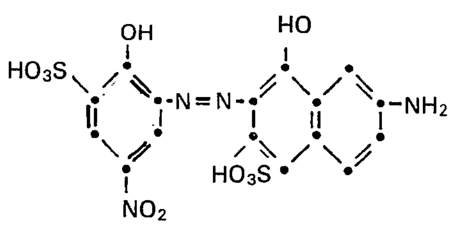 | 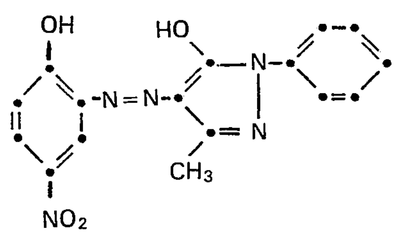 | 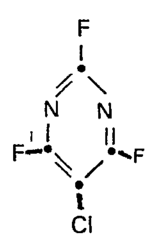 | braun |

*Färbevorschrift I*

In 4000 Teilen Wasser von 50°C werden nacheinander 4 Teile 80%ige Essigsäure, 2 Teile des Ammoniumsalzes des sauren Schwefelsäureesters des Adduktes aus einem Fettamin (bestehend aus 30% Hexadecylamin, 25% Octadecylamin und 45% Octadecenylamin und 7 Mol Äthylenoxyd) sowie 4 Teile Ammoniumsulfat gelöst.

2 Teile des gemäss Beispiel 1 erhaltenen Farbstoffes werden in 100 Teilen Wasser heiss gelöst und dem obigen Färbebad zugegeben. Dann wird mit 100 Teilen vorgenetzten Wollstrickgarn eingegangen und im Verlaufe von 30 Minuten die Temperatur des Bades von 50 auf 80°C erhöht. Nach 20 Minuten Färben bei 80°C wird zum Sieden erhitzt und anschliessend 90 Minuten kochend gefärbt. Der Farbstoff zieht fast vollkommen auf das Substrat auf. Nach Abkühlen des Bades auf 80°C wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heissem und kaltem Wasser, Absäuern mit 1 Teil 80%iger Ameisensäure, Zentrifugieren und Trocknen erhält man ein rotbraun gefärbtes Wollgarn von sehr guter Nass- und Reibechtheit sowie ausgezeichneter Lichtechtheit.

*Färbevorschrift II*

2 Teile des gemäss Beispiel 33 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichtes zunimmt, und dann getrocknet.

Danach imprägniert man das Gewebe mit einer 20°C warmen Lösung, die pro Liter 5 Gramm Natriumhydroxyd und 300 Gramm Natriumchlorid enthält, quetscht auf 75% Gewichtszunahme ab, dämpft die Färbung während 30 Sekunden bei 100 bis 101°C, spült, seift während einer Viertelstunde in einer 0,3%igen kochenden Lösung eines ionenfreien Waschmittels, spült und trocknet.

**Patentansprüche**

1. Chromkomplexfarbstoffe, die in Form der freien Säure der Formel

(1)

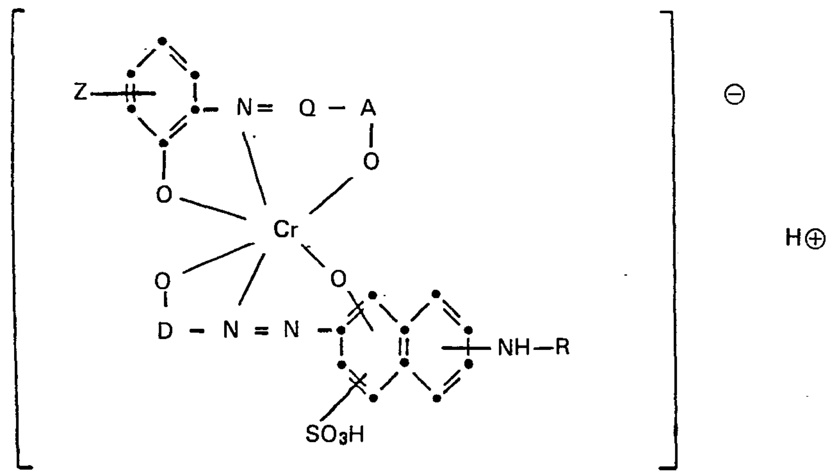

entsprechen, worin Z Wasserstoff, Nitro, Chlor oder eine Arylazogruppe, Q ein Stickstoffatom oder die CH-Gruppe, A für den Fall, dass Q ein Stickstoffatom ist, den Rest einer in o-Stellung zum Sauerstoffatom kuppelnden Kupplungskomponente oder, für den Fall, dass Q die CH-Gruppe ist, den Rest eines o-Hydroxyaldehyds, D einen gegebenenfalls mit Nitro oder Chlor substituierten Sulfophenylrest oder einen gegebenenfalls mit Nitro substituierten Sulfonaphthylrest, der in o-Stellung zum Sauerstoffatom an die Azogruppe gebunden ist, und R eine Fluorchlorpyrimidylgruppe, Chloracetyl, Bromacetyl, $\alpha$-Chlor- oder $\alpha$-Bromacryloyl oder $\alpha,\beta$-Dichlor- oder $\alpha,\beta$-Dibrompropionyl bedeutet.

2. Chromkomplexe gemäss Anspruch 1, worin A der Rest eines 1-Aryl-3-methyl-pyrazol-5-ons, eines Acetoacetarylids, eines Naphthols oder eines in o-Stellung kuppelnden, mit Acylamino, niedrigmolekularem Alkyl oder niedrigmolekularem Dialkylamino substituierten Phenols ist und Q ein Stickstoffatom bedeutet.

3. Chromkomplexe gemäss Anspruch 1, worin Q die CH-Gruppe ist und A sich von einem gegebenenfalls mit Halogen, niedrigmolekularem Alkyl oder Arylazo substituierten o-Hydroxybenzaldehyd ableitet.

4. Chromkomplexe gemäss den Ansprüchen 1 und 2, die in Form der freien Säure der Formel

(6)

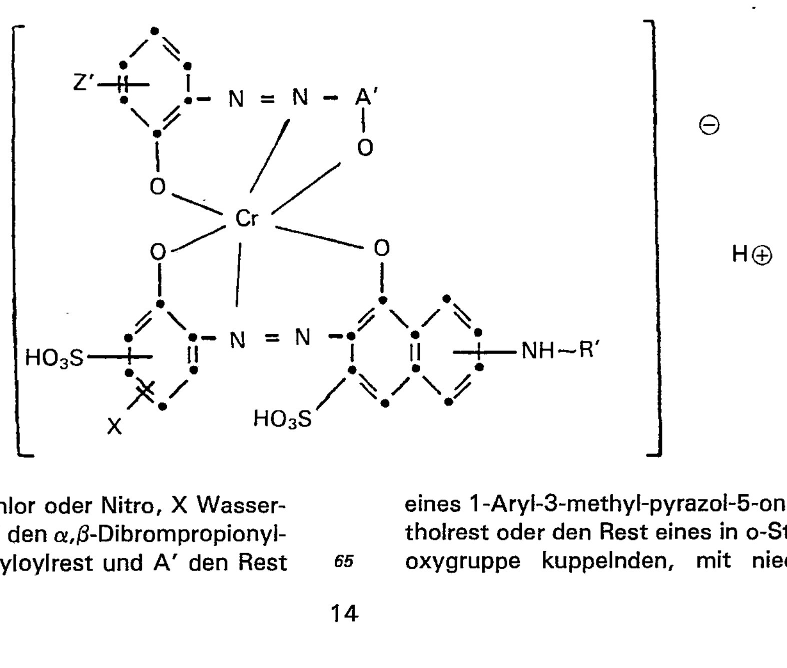

entsprechen, worin Z' Chlor oder Nitro, X Wasserstoff, Chlor oder Nitro, R' den $\alpha,\beta$-Dibrompropionylrest oder den $\alpha$-Bromacryloylrest und A' den Rest eines 1-Aryl-3-methyl-pyrazol-5-ons, einen $\beta$-Naphtholrest oder den Rest eines in o-Stellung zur Hydroxygruppe kuppelnden, mit niedrigmolekularem

Alkyl oder Dialkylamino substituierten Phenols ist.

5. Chromkomplexe gemäss Anspruch 4, worin A' den Rest eines 1-Phenyl-3-methyl-pyrazol-5-ons ist.

6. Chromkomplexe gemäss den Ansprüchen 4 und 5, die in Form der freien Säure der Formel

(7) 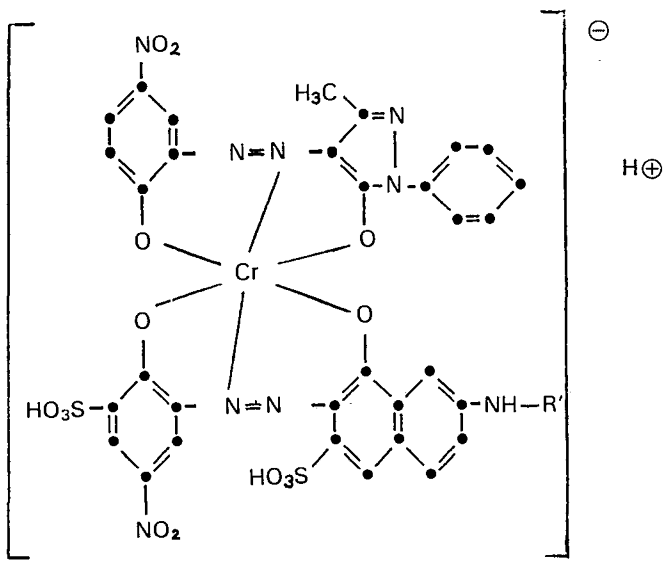

entsprechen, worin R' dasselbe wie in Anspruch 4 bedeutet.

7. Chromkomplexe gemäss den Ansprüchen 1 und 2, die in Form der freien Säure der Formel

(9) 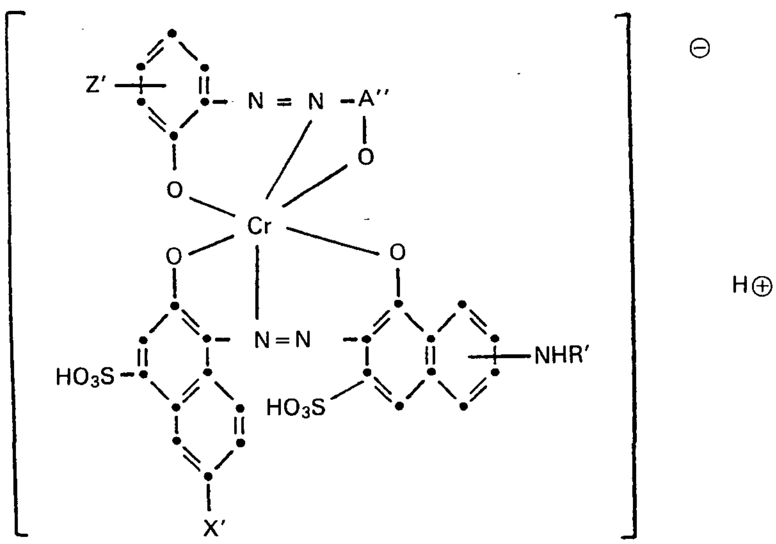

entsprechen, worin Z' Chlor oder Nitro, X' Wasserstoff oder Nitro, R' den $\alpha,\beta$-Dibrompropionyl- oder den $\alpha$-Bromacryloylrest und A'' einen $\beta$-Naphtholrest, den Rest eines gegebenenfalls mit Chlor mono- oder disubstituierten 1-Naphthols oder den Rest eines in o-Stellung zur Hydroxygruppe kuppelnden, mit niedrigmolekularem Alkyl oder Dialkylamino substituierten Phenols bedeutet.

8. Chromkomplexe gemäss Anspruch 7, worin A'' den Rest eines 3-N,N-Dialkylaminophenols ist, dessen Alkylgruppen 1 bis 5 C-Atome aufweisen.

9. Der Farbstoff, gemäss Anspruch 5, der Formel

(10) 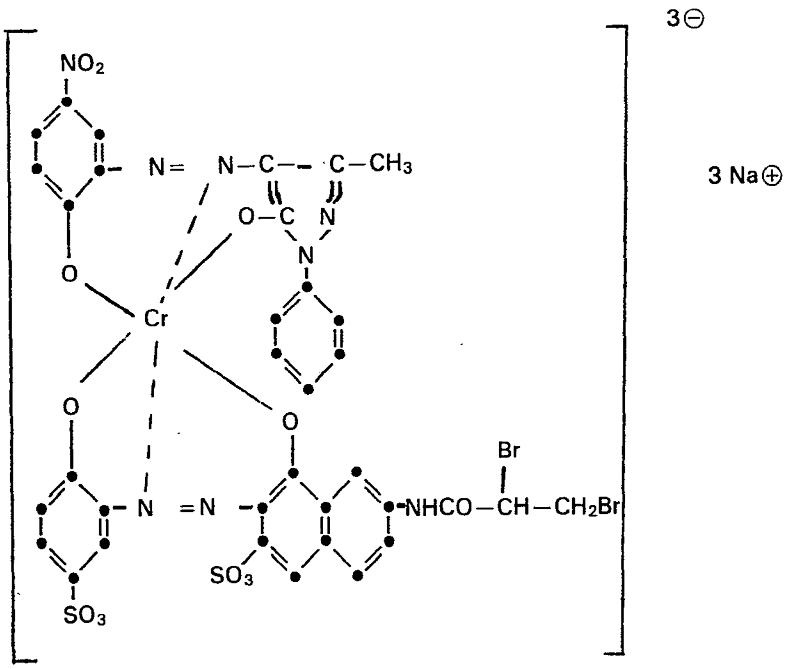

10. Der Farbstoff gemäss Anspruch 8, der Formel

(11) 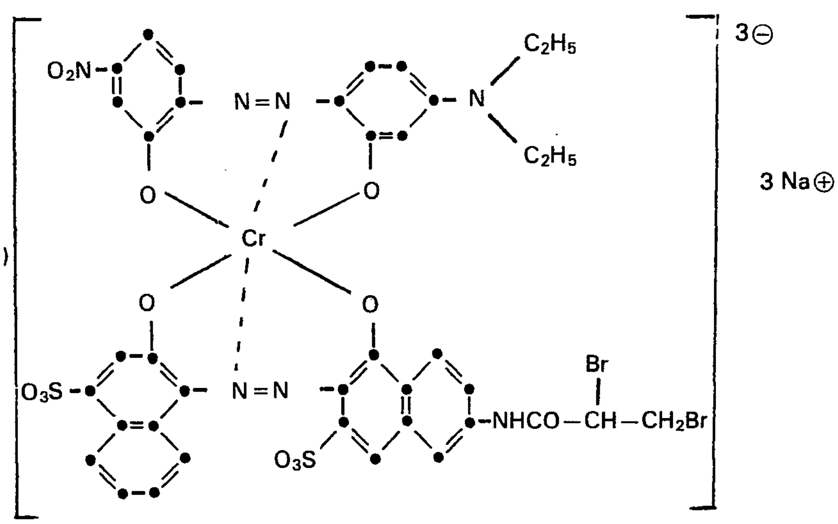

11. Verfahren zur Herstellung von Chromkomplexfarbstoffen, die in Form der freien Säure der Formel

(1) 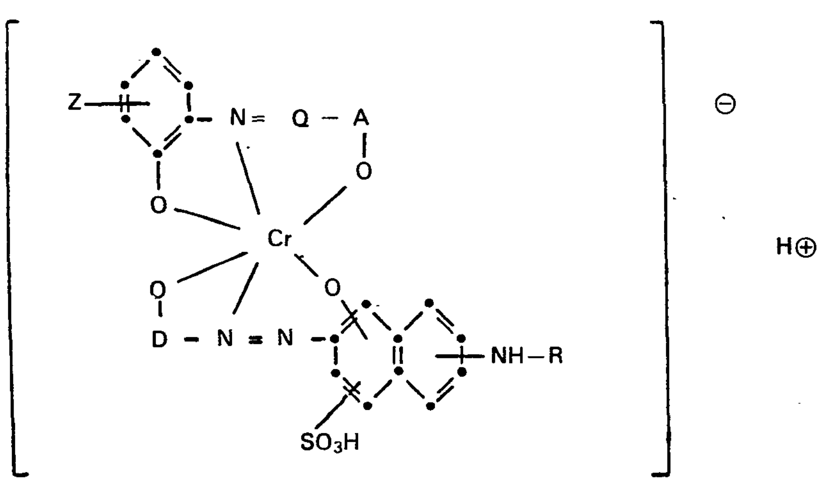

entsprechen, worin Z Wasserstoff, Nitro, Chlor oder eine Arylazogruppe, Q ein Stickstoffatom oder die CH-Gruppe, A für den Fall, dass Q ein Stickstoffatom ist, den Rest einer in o-Stellung zum Sauerstoffatom kuppelnden Kupplungskomponente oder, für den Fall, dass Q die CH-Gruppe ist, den Rest eines o-Hydroxyaldehyds, D einen gegebenenfalls mit Nitro oder Chlor substituierten Sulfophenylrest oder einen gegebenenfalls mit Nitro substituierten Sulfonaphthylrest, der in o-Stellung zum Sauerstoffatom an die Azogruppe gebunden ist, und R eine Fluorchlorpyrimidylgruppe, Chloracetyl, Bromacetyl, α-Chlor- oder α-Bromacryloyl oder α,β-Dichlor- oder α,β-Dibrompropionyl ist, dadurch gekennzeichnet, dass man die eine der Verbindungen der Formel

(2) 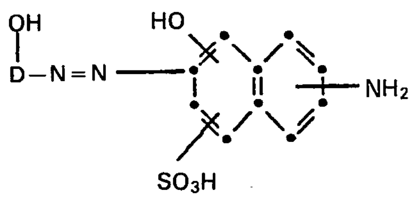

und

(3) 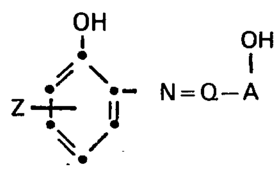

mit einem chromabgebenden Mittel zum 1:1-Chromkomplex umsetzt und diesen mit der andern der beiden obigen Verbindungen in den 1:2-Chromkomplex überführt, und vor oder nach der Chromierung die Verbindung der Formel (2) mit einem Acylierungsmittel umsetzt, das den Rest R abgibt, worin R eine Fluorchlorpyrimidylgruppe, Chloracetyl, Bromacetyl, α-Chlor- oder α-Bromacryloyl oder α,β-Dichlor- oder α,β-Dibrompropionyl ist, wobei, wenn Q die CH-Gruppe bedeutet, der 1:1-Chromkomplex der Verbindung der Formel (2) statt mit dem Azomethin der Formel (3) auch mit einem Gemisch des Amins der Formel

(4) 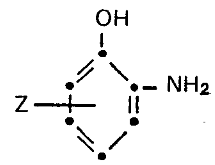

und des Aldehyds der Formel

(5) OCH—A—OH

umgesetzt werden kann.

12. Verfahren gemäss Anspruch 11, dadurch gekennzeichnet, dass man einen Chromkomplex, der in Form der freien Säure der Formel

(12) 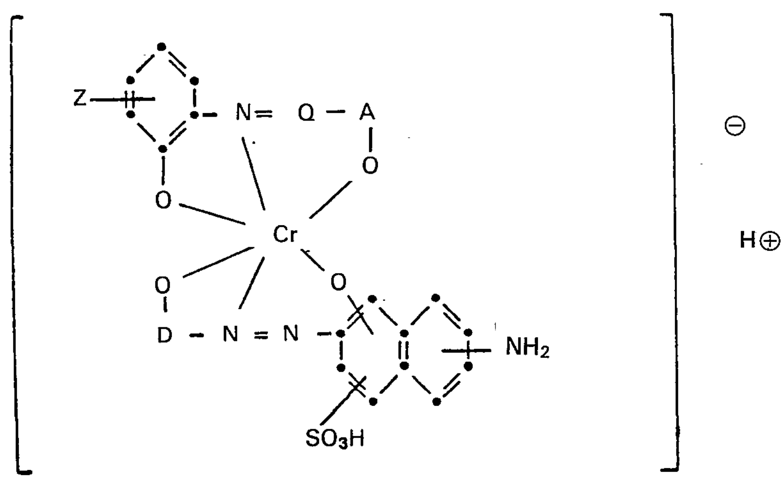

entspricht, worin A der Rest eines 1-Aryl-3-methylpyrazol-5-ons, eines Acetoacetarylids, eines Naphthols oder eines in o-Stellung kuppelnden, mit Acylamino, niedrigmolekularem Alkyl oder niedrigmolekularem Dialkylamino substituierten Phenols ist und Q ein Stickstoffatom bedeutet, mit einem den Rest R abgebenden Acylierungsmittel umsetzt.

13. Verfahren gemäss Anspruch 11, dadurch gekennzeichnet, dass man einen Chromkomplex der in Anspruch 12 angegebenen Formel, worin Q die CH-Gruppe ist und A sich von einem gegebenenfalls mit Halogen, niedrigmolekularem Alkyl oder Arylazo substituierten o-Hydroxybenzaldehyd ableitet, mit einem den Rest R abgebenden Acylierungsmittel umsetzt.

14. Verfahren gemäss den Ansprüchen 11 und 12, dadurch gekennzeichnet, dass man einen Chromkomplex, der in Form der freien Säure der Formel

(13) 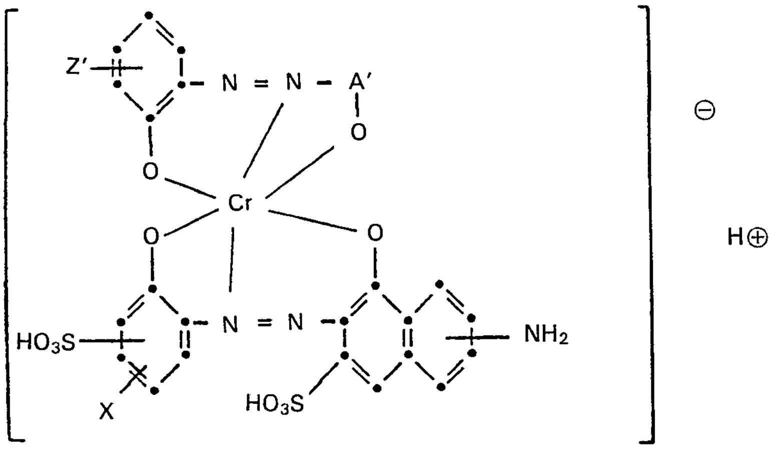

entspricht, worin Z' Chlor oder Nitro, X Wasserstoff, Chlor oder Nitro und A' den Rest eines 1-Aryl-3-methyl-pyrazol-5-ons, einen β-Naphtholrest oder den Rest eines in o-Stellung zur Hydroxygruppe kuppelnden, mit niedrigmolekularem Alkyl oder Dialkylamino substituierten Phenols ist, mit α,β-Dibrompropionsäurechlorid oder α-Bromacryloylchlorid umsetzt.

15. Verfahren gemäss Anspruch 14, dadurch gekennzeichnet, dass man von einem Chromkomplex der angegebenen Formel ausgeht, worin A' der Rest eines 1-Phenyl-3-methyl-pyrazol-5-ons ist.

16. Verfahren gemäss den Ansprüchen 14 und 15, dadurch gekennzeichnet, dass man von einem Chromkomplex ausgeht, der in Form der freien Säure der Formel

(14) 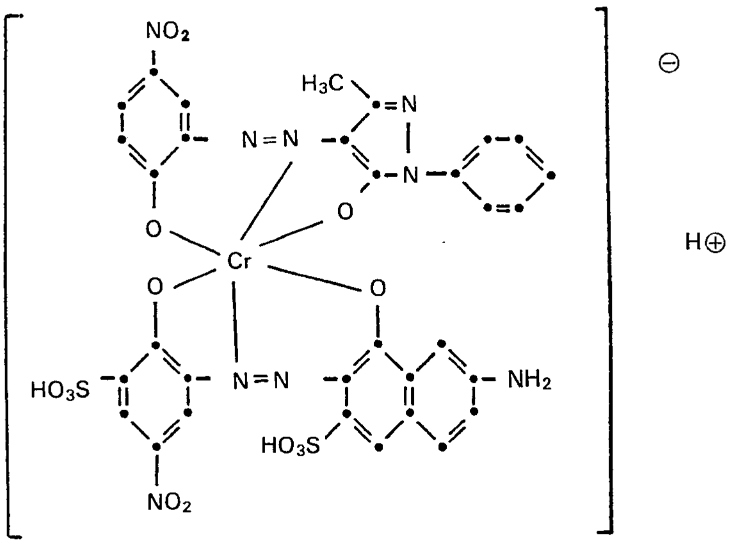

entspricht.

17. Verfahren gemäss den Ansprüchen 11 und 12, dadurch gekennzeichnet, dass man einen Chromkomplex, der in Form der freien Säure der Formel

(15) 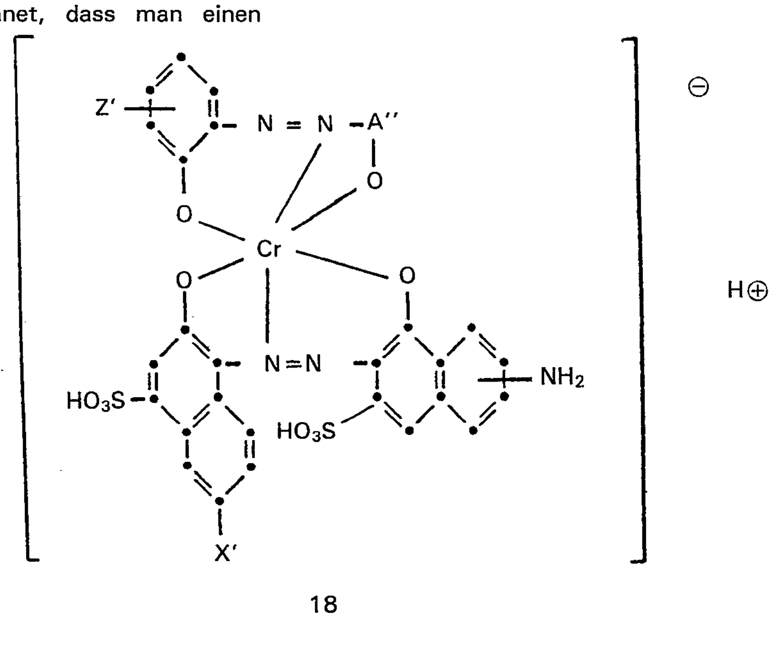

entspricht, worin Z' Chlor oder Nitro, X' Wasserstoff oder Nitro und A'' einen β-Naphtholrest, den Rest eines gegebenenfalls mit Chlor mono- oder disubstituierten 1-Naphthols oder den Rest eines in o-Stellung zur Hydroxygruppe kuppelnden, mit niedrigmolekularen Alkyl oder Dialkylamino substituierten Phenols bedeutet, mit α,β-Dibrompropionsäurechlorid oder α-Bromacryloylchlorid umsetzt.

18. Verfahren gemäss Anspruch 17, dadurch gekennzeichnet, dass man von einem Chromkomplex der angegebenen Formel ausgeht, worin A'' der Rest eines 3-N,N-Dialkylaminophenols ist, dessen Alkylgruppen 1 bis 5 C-Atome aufweisen.

19. Verfahren gemäss Anspruch 15, dadurch gekennzeichnet, dass man einen Chromkomplex, der in Form der freien Säure der Formel

(16)

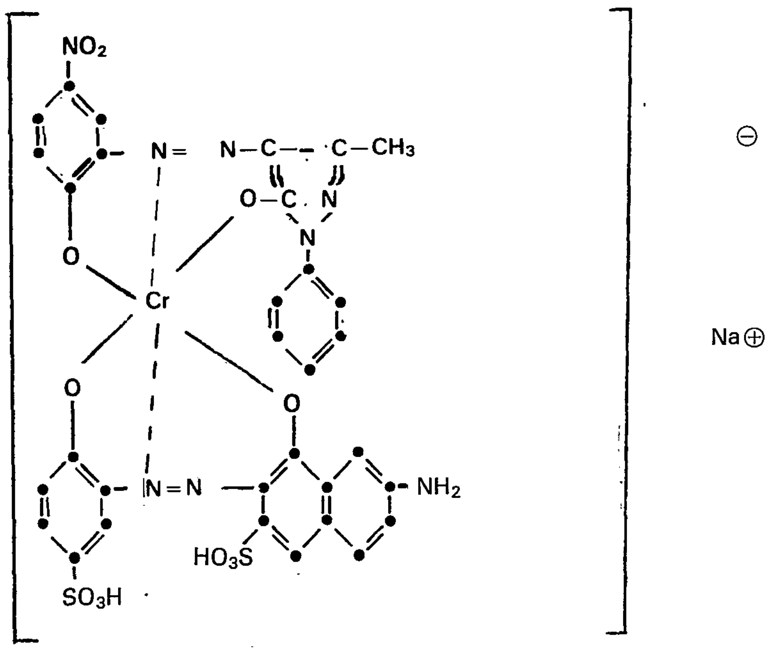

entspricht, mit α,β-Dibrompropionsäurechlorid umsetzt.

20. Verfahren gemäss Anspruch 18, dadurch gekennzeichnet, dass man einen Chromkomplex, der in Form der freien Säure der Formel

(17)

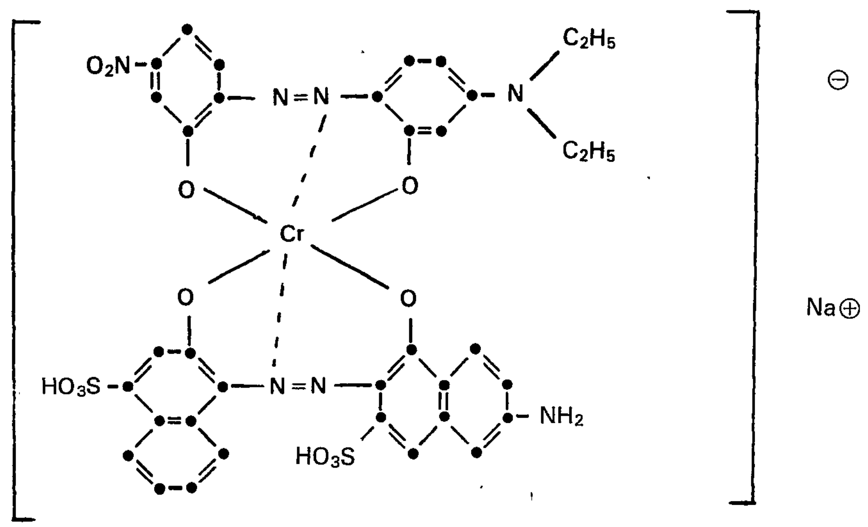

entspricht, mit α,β-Dibrompropionylchlorid umsetzt.

21. Verfahren zum Färben und Bedrucken natürlicher oder synthetischer Polyamidmaterialien unter Verwendung der Farbstoffe gemäss den Ansprüchen 1 bis 10.

22. Das gemäss Anspruch 21 erhaltene, gefärbte oder bedruckte Material.

**Claims**

1. A chromium complex dye which, in the form of the free acid, has the formula

(1) 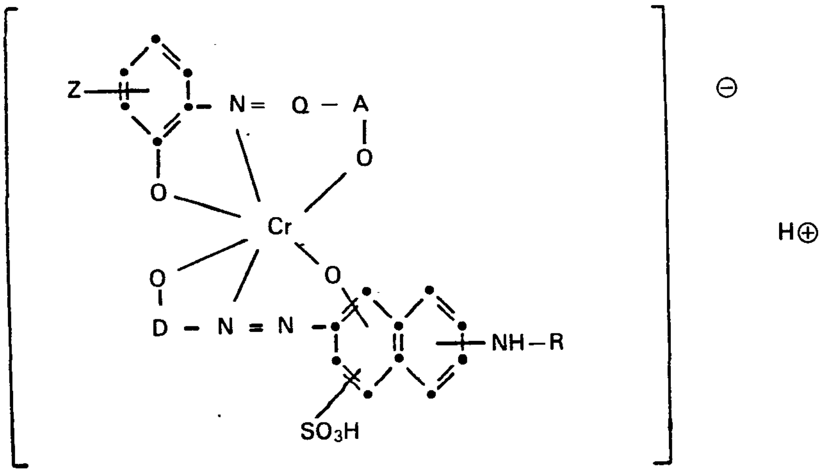

wherein Z is hydrogen, nitro, chlorine, or an arylazo group, Q is a nitrogen atom or the CH- group, A is the radical of a coupling component which couples in the ortho-position to the oxygen atom if Q is a nitrogen atom, or is the radical of an o-hydroxyaldehyde if Q is the CH- group, D is a sulfophenyl radical which is unsubstituted or substituted by nitro or chlorine, or a sulfonaphthyl radical which is unsubstituted or substituted by nitro and is bonded to the azo group in the ortho-position to the oxygen atom, and R is a fluorochloropyrimidyl group, or is chloroacetyl, bromoacetyl, α-chloro- or α-bromoacryloyl, or α,β-dichloro- or α,β-dibromopropionyl.

2. A chromium complex according to claim 1, wherein A is the radical of a 1-aryl-3-methylpyrazol-5-one, of an acetoacetarylide, of a naphthol or of a phenol which couples in the ortho-position to the hydroxyl group and is substituted by acylamino, low molecular alkyl or low molecular dialkylamino, and Q is a nitrogen atom.

3. A chromium complex according to claim 1, wherein Q is the CH- group and A is derived from an o-hydroxybenzaldehyde which is unsubstituted or substituted by halogen, low molecular alkyl or arylazo.

4. A chromium complex according to either of claims 1 or 2 which, in the form of the free acid, has the formula

(6) 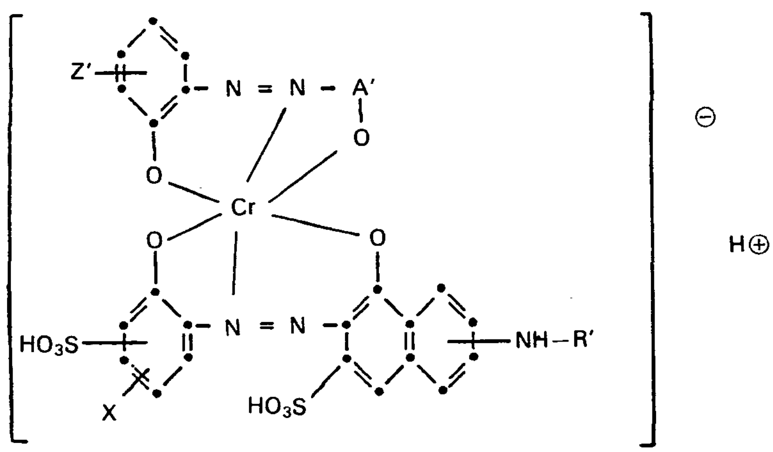

wherein Z' is chlorine or nitro, X is hydrogen, chlorine or nitro, R' is the α,β-dibromopropionyl radical or the α-bromoacryloyl radical, and A' is the radical of a 1-aryl-3-methylpyrazol-5-one, a β-naphthol radical or the radical of a phenol which couples in the ortho-position to the hydroxyl group and is substituted by low molecular alkyl or dialkylamino.

5. A chromium complex according to claim 4, wherein A' is the radical of a 1-phenyl-3-methylpyrazol-5-one.

6. A chromium complex according to either of claims 4 or 5 which, in the form of the free acid, has the formula

(7) 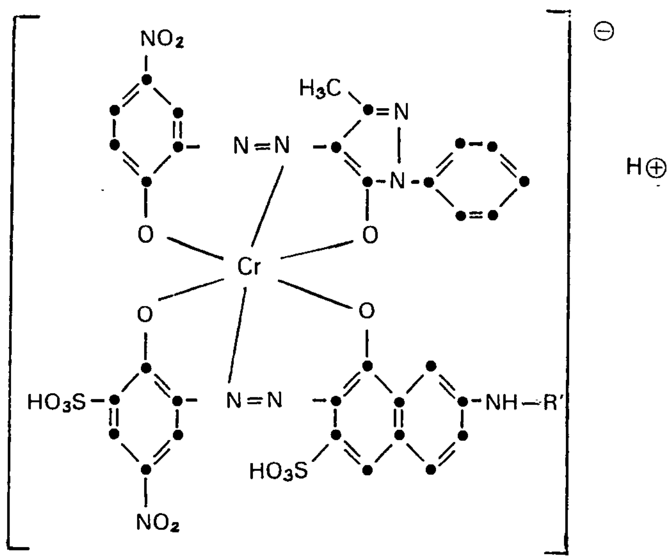

wherein R' is as defined in claim 4.

7. A chromium complex according to either of claims 1 or 2 which, in the form of the free acid, has the formula

(9) 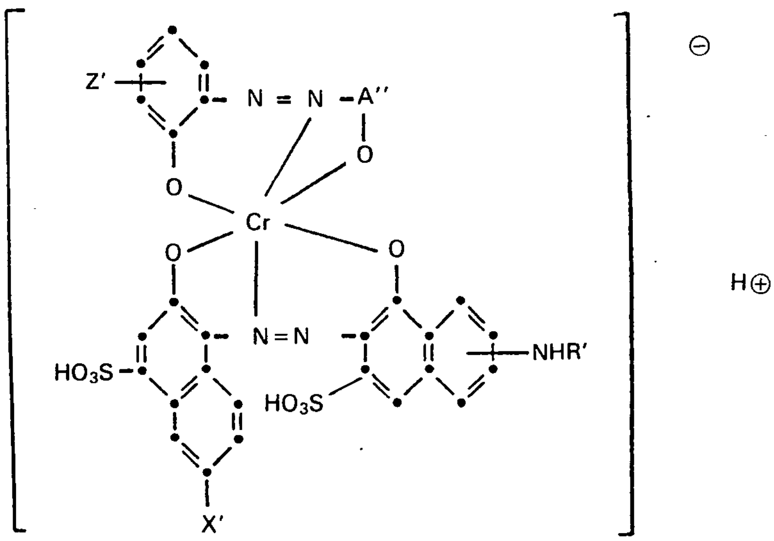

wherein Z' is chlorine or nitro, X' is hydrogen or nitro, R' is the $\alpha,\beta$-dibromopropionyl radical or the $\alpha$-bromoacryloyl radical, and A'' is a $\beta$-naphthol radical, the radical of a 1-naphthol which is unsubstituted or mono- or disubstituted by chlorine, or the radical of a phenol which couples in the ortho-position to the hydroxyl group and is substituted by low molecular alkyl or dialkylamino.

8. A chromium complex according to claim 7, wherein A'' is the radical of a 3-N,N-dialkylaminophenol, the alkyl moieties of which contain 1 to 5 carbon atoms.

9. The dye according to claim 5 of the formula

(10)
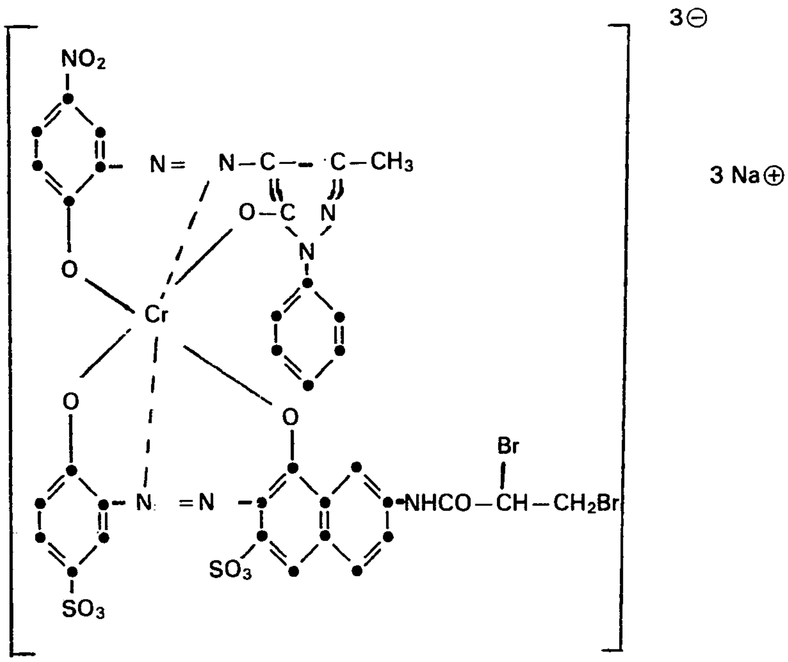

10. The dye according to claim 8 of the formula

(11)
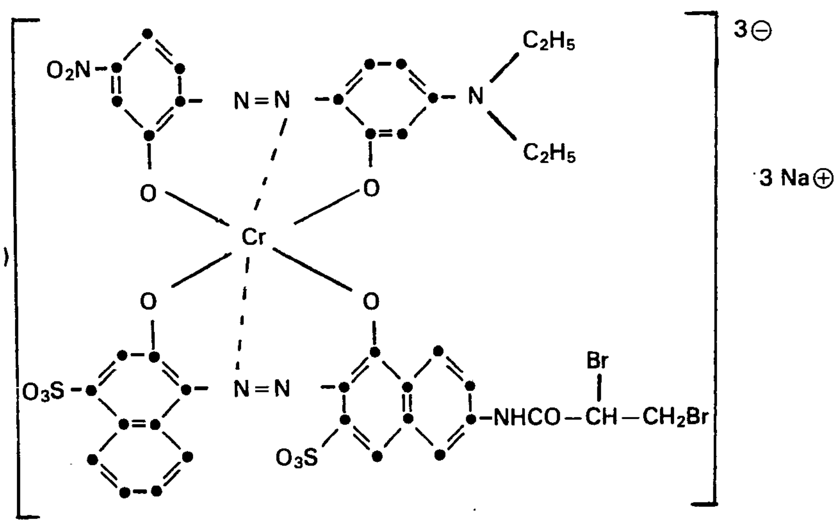

11. A process for the production of a chromium complex dye which, in the form of the free acid, has the formula

(1)
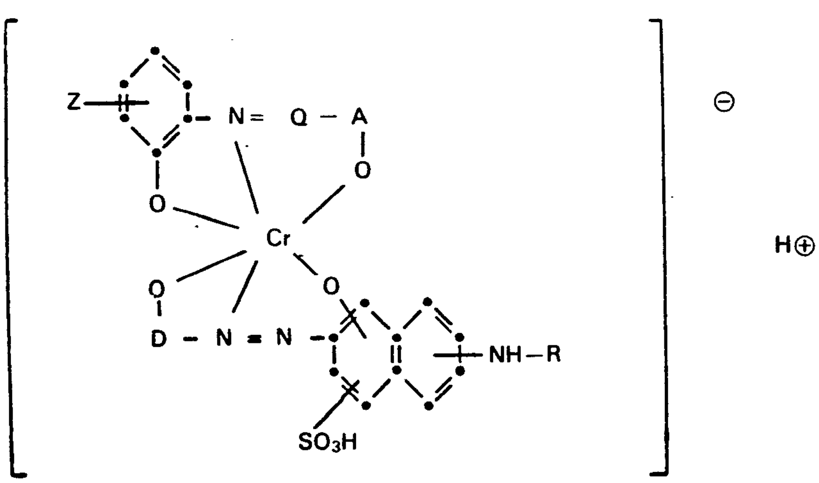

wherein Z is hydrogen, nitro, chlorine, or an arylazo group, Q is a nitrogen atom or the CH- group, A is the radical of a coupling component which couples in the ortho-position to the oxygen atom if Q is a nitrogen atom, or is the radical of an o-hydroxyaldehyde if Q is the CH- group, D is a sulfophenyl radical which is unsubstituted or substituted by nitro or chlorine, or a sulfonaphthyl radical which is unsubstituted or substituted by nitro and is bonded to the azo group in the ortho-position to the oxygen atom, and R is a fluorochloropyrimidyl group, or is chloroacetyl, bromoacetyl, α-chloro- or α-bromoacryloyl, or α,β-dichloro- or α,β-dibromopropionyl, which process comprises reacting one of the compounds of the formula

2 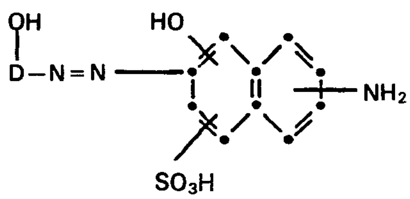

(3) 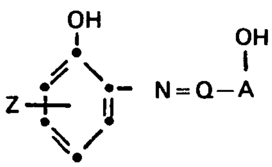

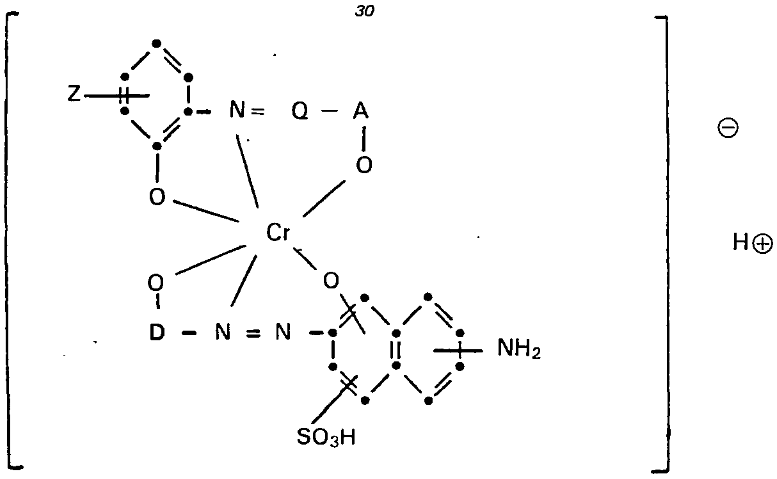

(12)

with a chromium donor to form the 1:1 chromium complex, and converting this latter with the other of the two compounds above into the 1:2 chromium complex, and, before or after the chroming, reacting the compound of the formula (2) with an acylating agent which introduces the radical R, where R is a fluorochloropyrimidyl group, or is chloroacetyl, bromoacetyl, α-chloro- or α-bromoacryloyl, or α,β-dichloro- or α,β-dibromopropionyl, with the proviso that, if Q is the CH- group, the 1:1 chromium complex of the compound of the formula (2) can also be reacted with a mixture of the amine of the formula

(4) 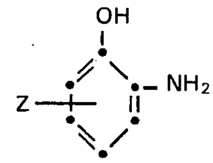

and the aldehyde of the formula

$$OCH-A-OH \quad (5)$$

instead of with the azomethine of the formula (3).

12. A process according to claim 11, which comprises reacting a chromium complex which, in the form of the free acid, has the formula

wherein A is the radical of a 1-aryl-3-methylpyrazol-5-one, of an acetoacetarylide, of a naphthol or of a phenol which couples in the ortho-position to the hydroxyl group and is substituted by acylamino, low molecular alkyl or low molecular dialkylamino, and Q is a nitrogen atom, with an acylating agent which introduces the radical R.

13. A process according to claim 11, which comprises reacting a chromium complex of the formula as indicated in claim 12, wherein Q is the CH- group and A is derived from an o-hydroxybenzaldehyde which is unsubstituted or substituted by halogen, low molecular alkyl or arylazo, with an acylating agent which introduces the radical R.

14. A process according to either of claims 11 or 12, which comprises reacting a chromium complex which, in the form of the free acid, has the formula

(13) 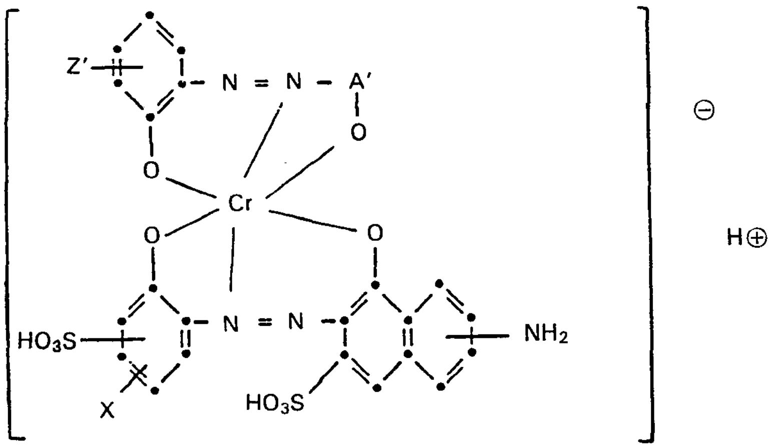

wherein Z' is chlorine or nitro, X is hydrogen, chlorine or nitro, and A' is the radical of a 1-aryl-3-methyl-pyrazol-5-one, a β-naphthol, or the radical of a phenol which couples in the ortho-position to the hydroxyl group and is substituted by low molecular alkyl or dialkylamino, with α,β-dibromopropionyl chloride or a α-bromoacryloyl chloride.

15. A process according to claim 14, wherein the starting material is a chromium complex of the indicated formula, wherein A' is the radical of a 1-phenyl-3-methylpyrazol-5-one.

16. A process according to either of claims 14 or 15, wherein the starting material is a chromium complex which, in the form of the free acid, has the formula

(14) 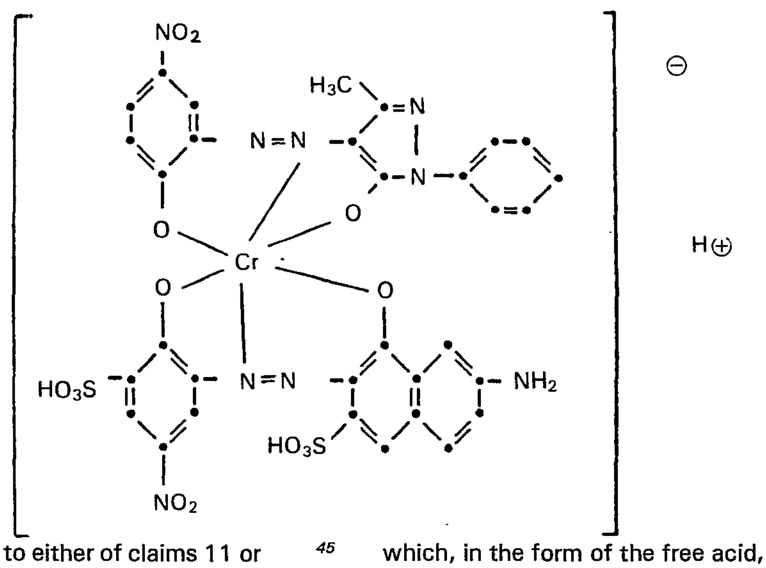

17. A process according to either of claims 11 or 12, which comprises reacting a chromium complex which, in the form of the free acid, has the formula

(15) 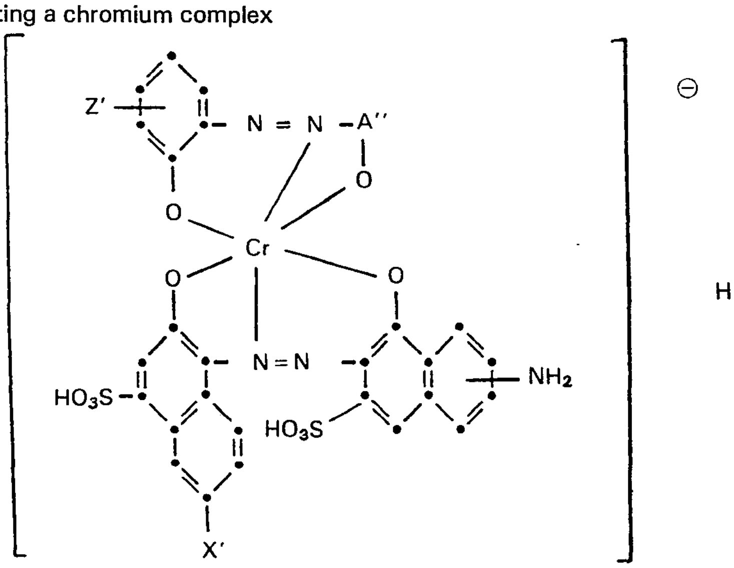

wherein Z' is chlorine or nitro, X' is hydrogen or nitro, and A'' is a β-naphthol radical, the radical of a 1-naphthol which is unsubstituted or mono- or disubstituted by chlorine, or is the radical of a phenol which couples in the ortho-position to the hydroxyl group and is substituted by low molecular alkyl or dialkylamino, with α,β-dibromopropionyl chloride or α-bromoacryloyl chloride.

18. A process according to claim 17, wherein the starting material is a chromium complex of the indicated formula, wherein A'' is the radical of a 3-N,N-dialkylaminophenol, the alkyl moieties of which contain 1 to 5 carbon atoms.

19. A process according to claim 15, which comprises reacting a chromium complex which, in the form of the free acid, has the formula

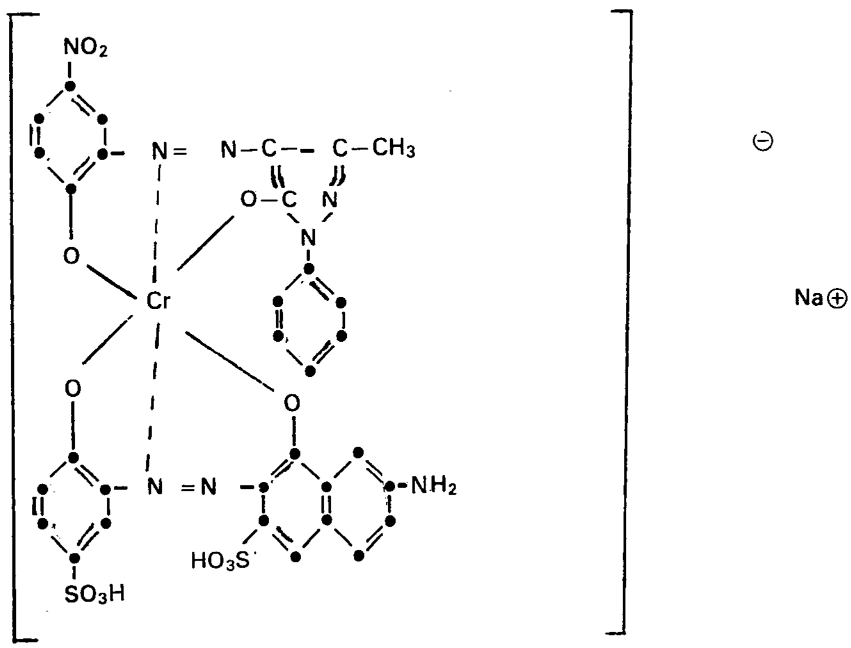

16

with α,β-dibromopropionyl chloride.

20. A process according to claim 18, which comprises reacting a chromium complex which, in the form of the free acid, has the formula

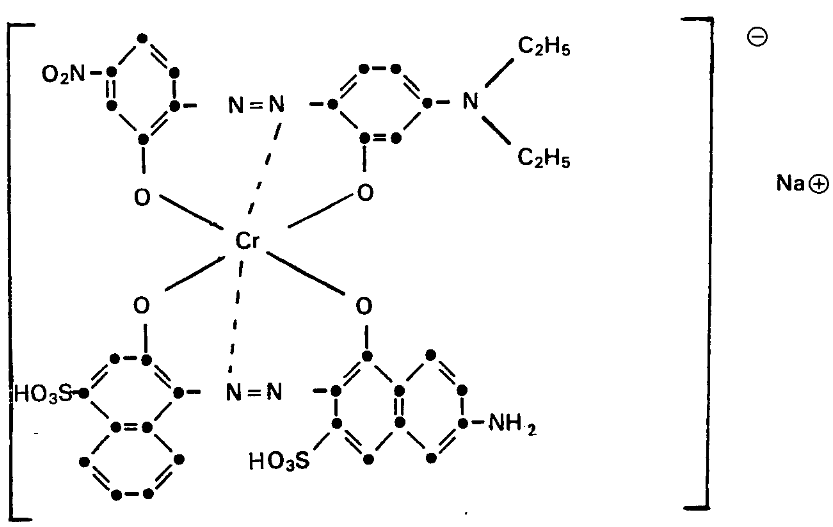

17

with α,β-dibromopropionyl chloride.

21. A process for dyeing and printing natural or synthetic polyamide material, which comprises the use of a dye according to any one of claims 1 to 10.

22. The dyed or printed material obtained according to claim 21.

**Revendications**

1. Colorants complexes de chrome, qui sous la forme des acides libres répondent à la formule:

(1) 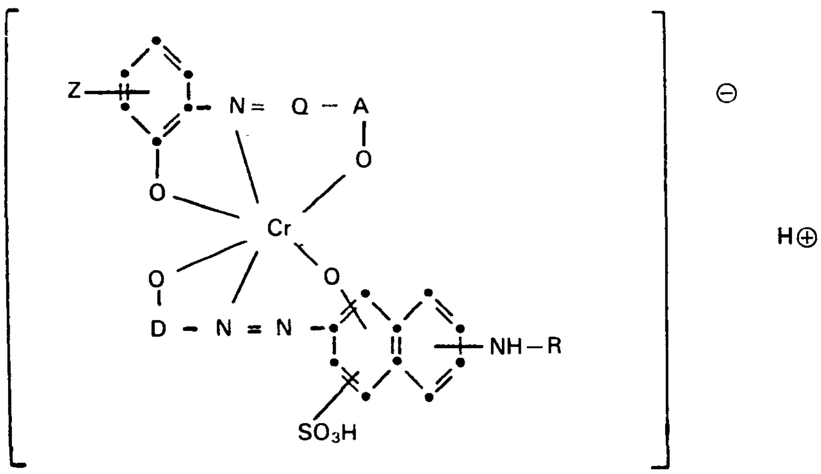

dans laquelle Z est un atome d'hydrogène, un groupement nitro, un atome de chlore ou un groupement arylazoïque; Q est un atome d'azote ou le groupement CH; A, dans le cas où Q est un atome d'azote, désigne le reste d'un composant de copulation en position ortho par rapport à l'atome d'oxygène, ou bien, dans le cas où Q est le groupement CH, le reste d'un o-hydroxyaldéhyde; D désigne un reste sulfophényle éventuellement nitro- ou chloro-substitué ou bien un reste sulfonaphthyle éventuellement nitro-substitué, qui est lié au groupement azoïque en position ortho par rapport à l'atome d'oxygène, et R désigne un groupement fluorochloropyrimidyle, chloroacétyle, bromoacétyle, $\alpha$-chloro- ou $\alpha$-bromo-acryloyle ou $\alpha,\beta$-dichloro- ou $\alpha,\beta$-dibromopropionyle.

2. Complexes de chrome selon la revendication 1, dans la formule desquels A désigne le reste d'une 1-aryl-3-méthyl-pyrazol-5-one, d'un acéto-acétarylide, d'un naphthol ou d'un phénol substitué par un groupement acylamino, un radical alkyle inférieur ou un radical dialkylamino inférieur, et fixé par copulation en position ortho, et Q désigne un atome d'azote.

3. Complexes de chrome selon la revendication 1, dans la formule desquels Q est le groupement CH, et A dérive d'un o-hydroxybenzaldéhyde éventuellement substitué par des atomes d'halogène, des radicaux alkyle inférieur ou des groupements arylazoïques.

4. Complexes de chrome selon les revendications 1 et 2, qui sous la forme des acides libres répondent à la formule:

(6) 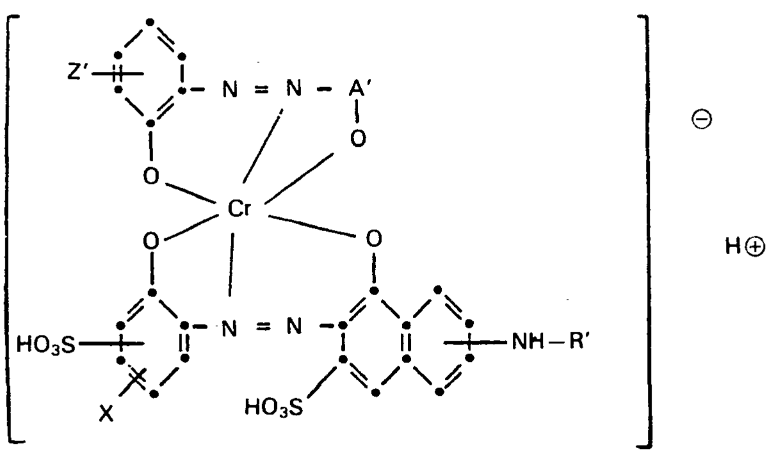

dans laquelle Z' est un atome de chlore ou un groupement nitro; X est un atome d'hydrogène ou de chlore ou un groupement nitro; R' est le reste $\alpha,\beta$-dibromopropionyle ou le reste $\alpha$-bromoacryloyle, et A' est le reste d'une 1-aryl-3-méthyl-pyrazol-5-one, un reste de $\beta$-naphthol ou le reste d'un phénol substitué par des radicaux alkyle inférieurs ou dialkylamino, et fixé par copulation en position ortho par rapport au groupement hydroxyle.

5. Complexes de chrome selon la revendication 4, dans la forme desquels A' est le reste d'une 1-phényl-3-méthyl-pyrazol-5-one.

6. Complexes de chrome selon les revendications 4 et 5, qui sous la forme des acides libres répondent à la formule:

(7)

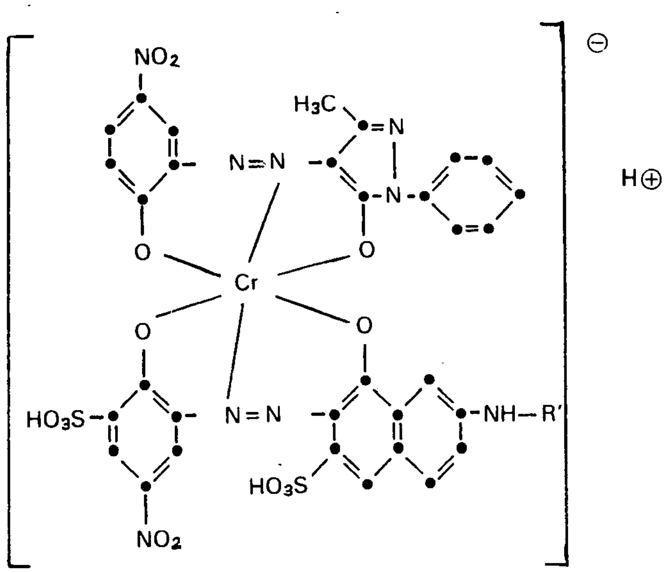

dans laquelle R' a la même définition que dans la revendication 4.

7. Complexes de chrome selon les revendications 1 et 2, qui sous la forme des acides libres répondent à la formule:

(9)

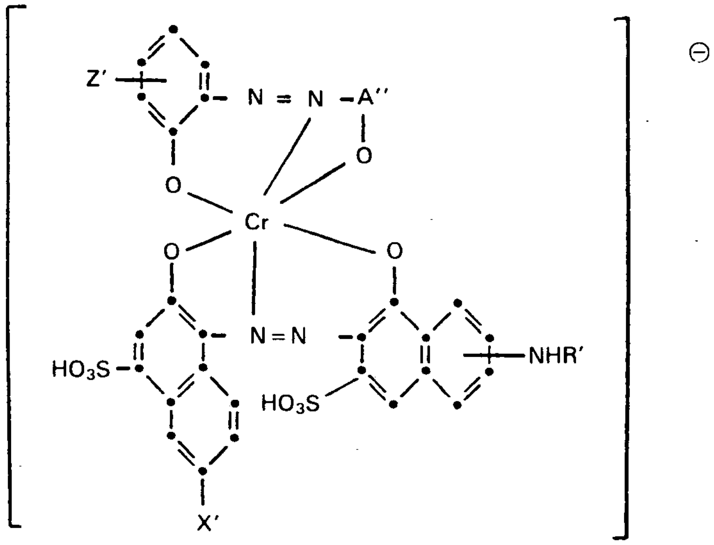

dans laquelle Z' est un atome de chlore ou un groupement nitro; X' est un atome d'hydrogène ou un groupement nitro; R' désigne le reste $\alpha,\beta$-dibromopropionyle ou le reste $\alpha$-bromoacryloyle, et A'' désigne un reste de $\beta$-naphthol, le reste d'un 1-naphthol éventuellement mono- ou di-substitué par du chlore, ou bien le reste d'un phénol substitué par des radicaux alkyle inférieur ou dialkylamino, et fixé par copulation en position ortho par rapport au groupement hydroxyle.

8. Complexes de chrome selon la revendication 7, dans la formule desquels A'' est le reste d'un 3-N,N-dialkylaminophénol, dont les radicaux alkyle contiennent de 1 à 5 atomes de carbone.

9. Colorant selon la revendication 5, de formule:

(10) 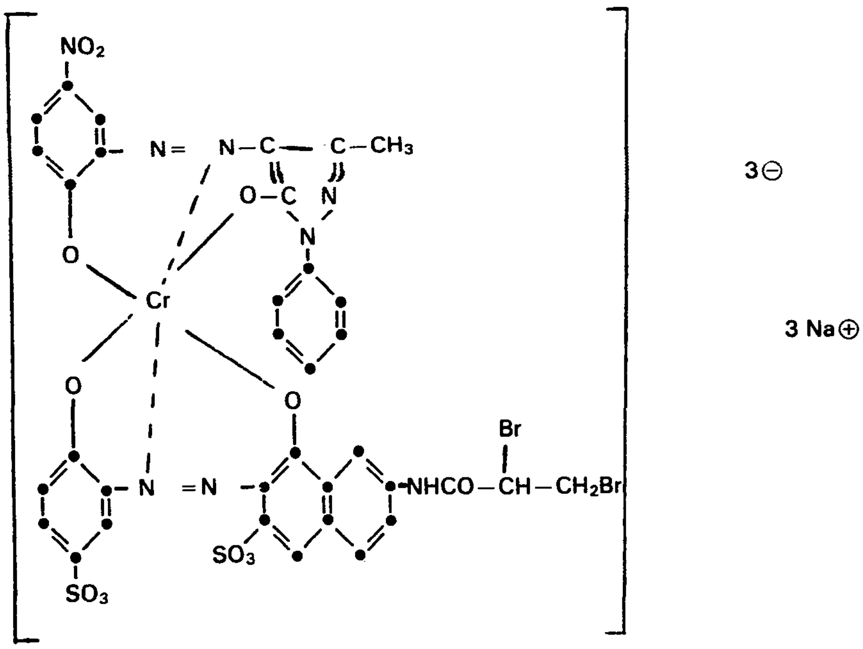

10. Colorant selon la revendication 8, de formule:

(11) 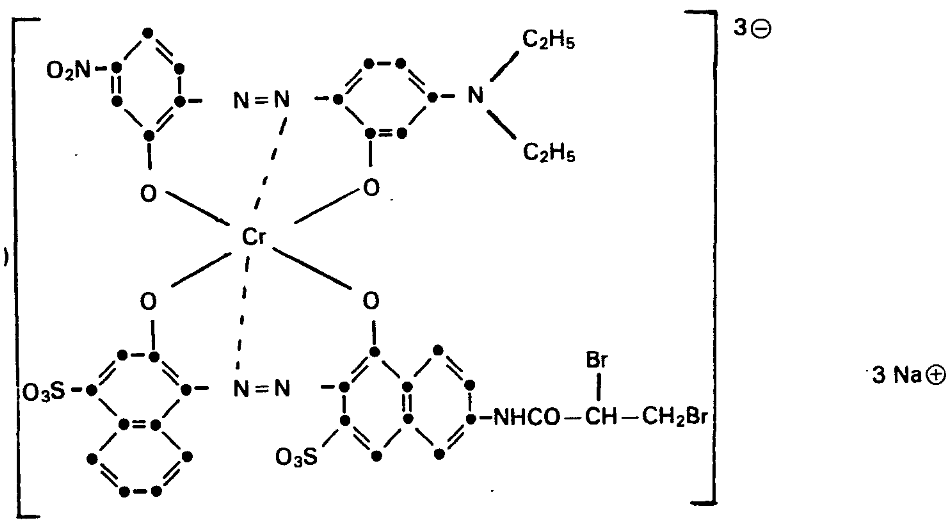

11. Procédé de fabrication de colorants complexes de chrome qui sous la forme des acides libres répondent à la formule:

(1) 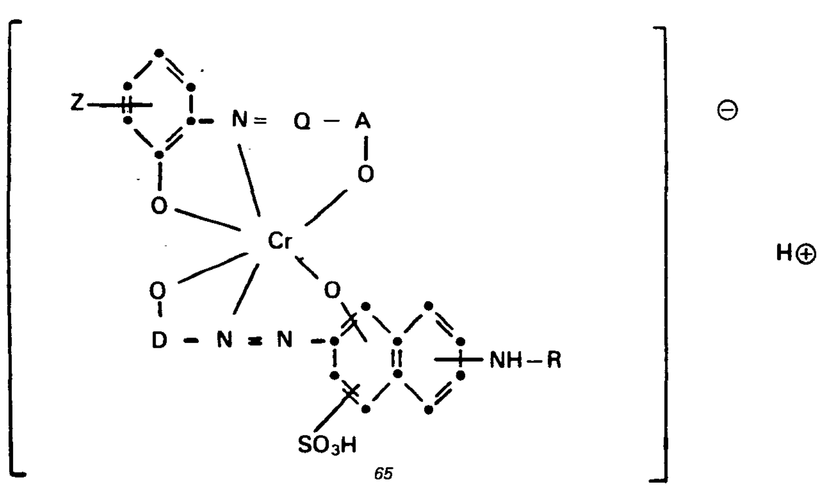

dans laquelle Z est un atome d'hydrogène, un groupement nitro, un atome de chlore ou un groupement arylazoïque; Q est un atome d'azote ou le groupement CH; A, dans le cas où Q est un atome d'azote, désigne le reste d'un composant de copulation en position ortho par rapport à l'atome d'oxygène, ou bien, dans le cas où Q est le groupement CH, le reste d'un o-hydroxyaldéhyde; D désigne un reste sulfophényle éventuellement nitro- ou chloro-substitué ou bien un reste sulfonaphthyle éventuellement nitro-substitué, qui est lié au groupement azoïque en position ortho par rapport à l'atome d'oxygène, et R est un groupement fluorochloropyrimidyle, chloroacétyle, bromoacétyle, α-chloro- ou α-bromoacryloyle ou α,β-dichloro- ou α,β-dibromopropionyle, caractérisé en ce qu'on fait réagir un des deux composés de formule:

2 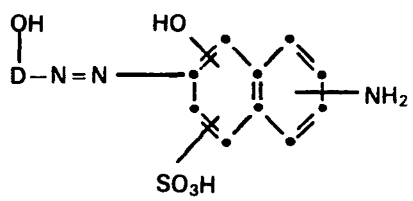

(3) 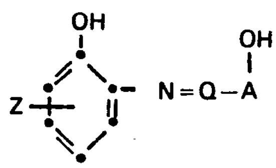

avec un agent donneur de chrome pour obtenir un complexe de chrome 1:1, et on transforme ce dernier en complexe de chrome 1:2 à l'aide de l'autre des deux composés susmentionnés et, soit avant soit après la fixation du chrome, on fait réagir le composé de formule (2) avec un agent d'acylation qui fournit le reste R, R étant un groupement fluorochloropyrimidyle, chloroacétyle, bromoacétyle, α-chloro ou α-bromo-acryloyle ou α,β-dichloro- ou α,β-dibromo-propionyle, ce qui fait que, lorsque Q désigne le groupement CH, on peut faire réagir le complexe de chrome 1:1 du composé de formule (2), non pas avec l'azométhine de formule (3) mais avec un mélange de l'amine de formule

(4) 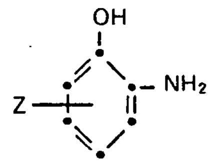

et de l'aldéhyde de formule

(5) OCH—A—OH

12. Procédé selon la revendication 11, caractérisé en ce qu'on fait réagir un complexe de chrome, qui sous la forme de l'acide libre répond à la formule:

(12) 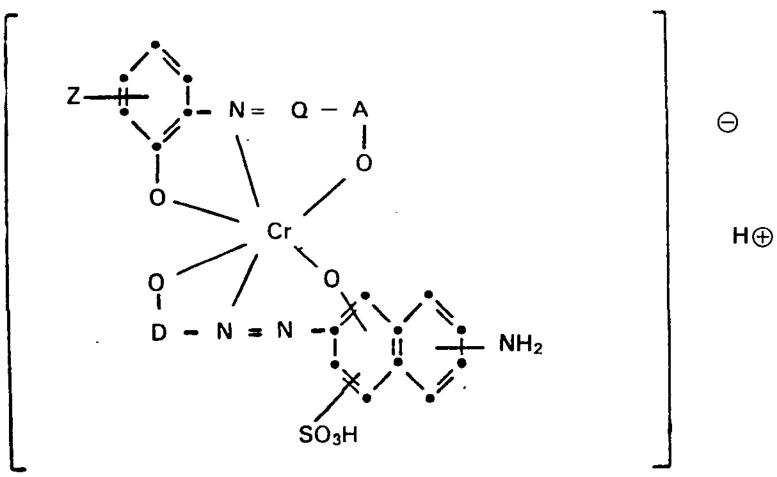

dans laquelle A désigne le reste d'une 1-aryl-3-méthyl-pyrazol-5-one, d'une acéto-acétarylide, d'un naphthol ou d'un phénol substitué par des groupements acylamino, alkyle inférieur ou dialkylamino inférieur, fixé par copulation en position ortho, et Q désigne un atome d'azote, avec un agent d'acylation fournissant le reste R.

13. Procédé selon la revendication 11, caractérisé en ce qu'on fait réagir un complexe de chrome répondant à la formule indiquée dans la revendication 11, dans laquelle Q est le groupement CH, et A dérive d'un o-hydroxybenzaldéhyde éventuellement substitué par l'halogène, des radicaux alkyle inférieur ou arylazoïque, avec un agent d'acylation fournissant le reste R.

14. Procédé selon les revendications 11 et 12, caractérisé en ce qu'on fait réagir un complexe de chrome, qui sous la forme de l'acide libre répond à la formule:

(13)

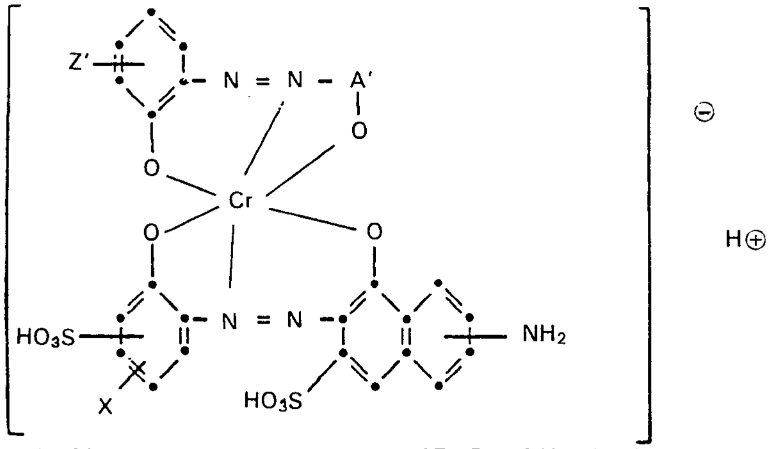

dans laquelle Z' est un atome de chlore ou un groupement nitro; X est un atome d'hydrogène ou de chlore ou un groupement nitro, et A' est le reste d'une 1-aryl-3-méthyl-pyrazol-5-one, un reste de $\beta$-naphthol ou bien le reste d'un phénol substitué par des radicaux alkyle inférieur ou dialkylamino, et fixé par copulation en position ortho par rapport au groupement hydroxyle, avec du chlorure d'acide $\alpha$,$\beta$-dibromopropionique ou du chlorure d'$\alpha$-bromoacryloyle.

15. Procédé selon la revendication 14, caractérisé en ce qu'on part d'un complexe de chrome de la formule indiquée, dans laquelle A' est le reste d'une 1-phényl-3-méthyl-pyrazol-5-one.

16. Procédé selon les revendications 14 et 15, caractérisé en ce qu'on part d'un complexe de chrome qui sous la forme de l'acide libre répond à la formule:

(14)

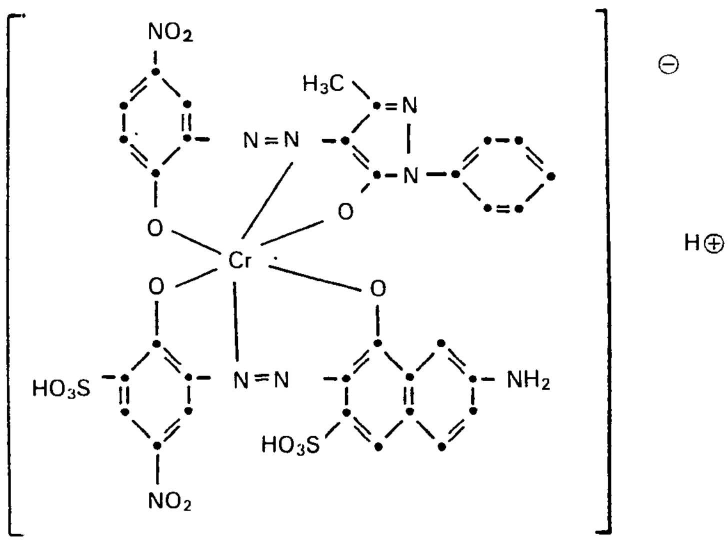

17. Procédé selon les revendications 11 et 12, caractérisé en ce qu'on fait réagir un complexe de chrome, qui sous la forme d'un acide libre répond à la formule:

(15)

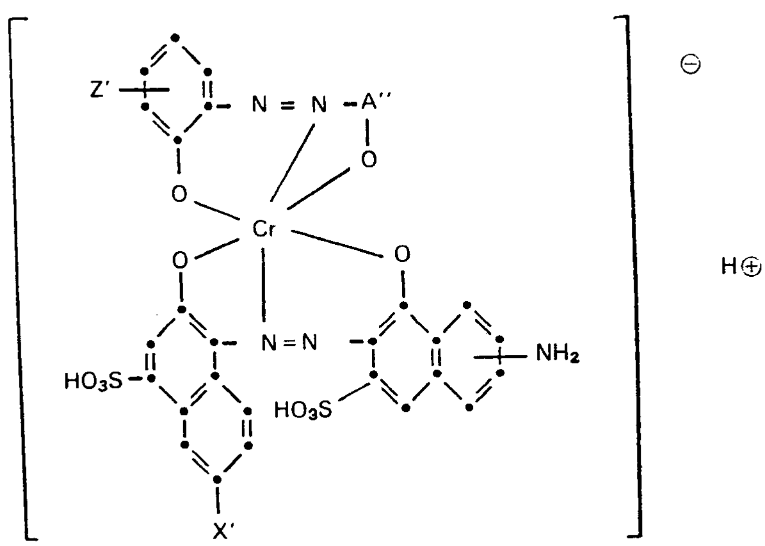

dans laquelle Z' est un atome de chlore ou un groupement nitro; X' est un atome d'hydrogène ou un groupement nitro, et A'' désigne un reste de β-naphthol, le reste d'un 1-naphthol éventuellement mono- ou disubstitué par des atomes de chlore, ou bien le reste d'un phénol substitué par des radicaux alkyle inférieur ou dialkylamino, et fixé par copulation en position ortho par rapport au groupement hydroxyle, avec du chlorure d'acide α,β-dibromopropionique ou du chlorure d'α-bromoacryloyle.

18. Procédé selon la revendication 17, caractérisé en ce qu'on part d'un complexe de chrome de la formule indiquée, dans laquelle A'' est le reste d'un 3-N,N-dialkylaminophénol dont les radicaux alkyle contiennent de 1 à 5 atomes de carbone.

19. Procédé selon la revendication 15, caractérisé en ce qu'on fait réagir un complexe de chrome, qui sous la forme de l'acide libre répond à la formule:

16

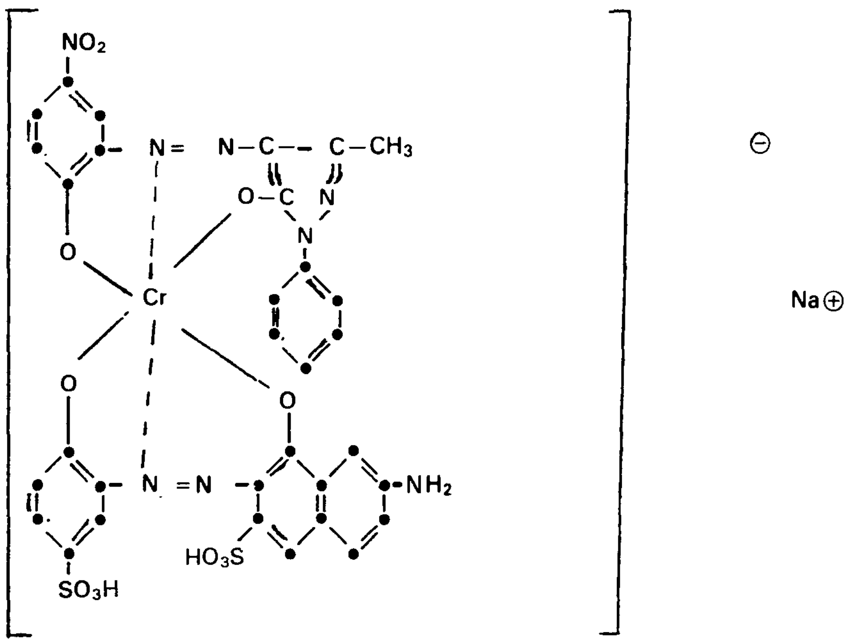

avec du chlorure d'acide α,β-dibromopropionique.

20. Procédé selon la revendication 18, caractérisé en ce qu'on fait réagir un complexe de chrome, qui sous la forme de l'acide libre répond à la formule:

17

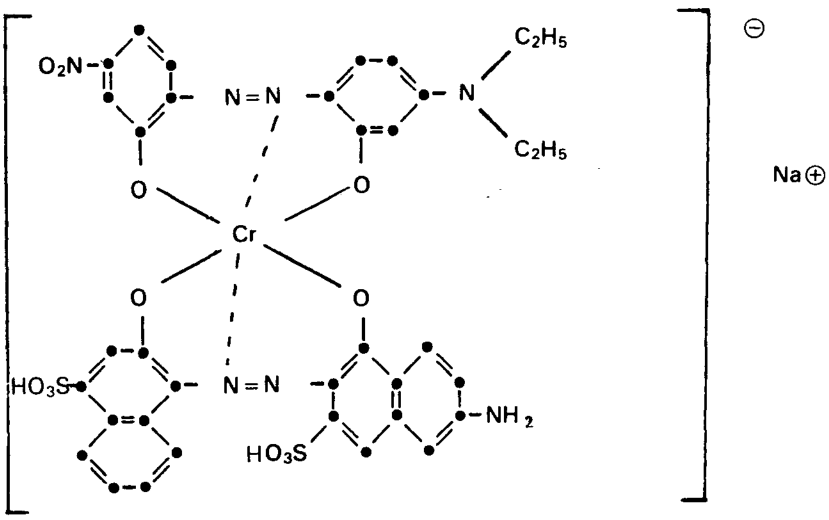

avec du chlorure d'α,β-dibromopropionyle.

21. Procédé de teinture et d'impression de matières naturelles ou synthétiques à base de polyamides, avec utilisation des colorants selon les revendications 1 à 10.

22. Matière teinte ou imprimée, obtenue selon la revendication 21.